# EUROPEAN PATENT SPECIFICATION

(11) **EP 4 634 094 B1**
(45) Date of publication and mention of the grant of the patent: **11.11.2026**
(21) Application number: 23786291.7
(22) Date of filing: 12.10.2023
(51) Int. Cl.: B65G 65/44, B65G 27/26, B65D 88/66, B65G 65/42, B65G 67/60

(54) **STORAGE AND RECLAIM SYSTEM FOR BULK MATERIAL**
LAGER- UND RÜCKGEWINNUNGSSYSTEM FÜR SCHÜTTGUT
SYSTÈME DE STOCKAGE ET DE RÉCUPÉRATION POUR MATÉRIAU EN VRAC

(30) Priority: 13.12.2022 EP 22213076
(43) Date of publication of application: 22.10.2025
(73) Proprietor: Macgregor Sweden AB, 400 40 Göteborg (SE)
(72) Inventor: WALLIN, Tomas, 749 44 Enköping (SE)
(74) Representative: Lind Edlund Kenamets Intellectual Property AB
(86) International application number: PCT/EP2023/078334
(87) International publication number: WO 2024/125852

(56) References cited:
- EP-A1- 2 716 581
- JP-A- 2002 326 722
- US-A- 4 907 721
- US-A1- 2009 260 539

## Description

### Technical Field

The present invention relates to a storage and reclaim system for bulk material. The system comprises a bulk material holding space having a bottom portion provided with a discharge port. The invention also relates to a use of the system and to a vessel, a land-based storage and a hopper including the system.

### Background Art

Today a substantial amount of cargo is shipped around the globe using large naval vessels or ships capable of traveling long distances over open sea. Similarly, a substantial amount of cargo is shipped more moderate distances using inland water ways, such as rivers and lakes. The large amount of cargo consequently brings about that large amount of cargo will have to be handled and stored e.g. in conjunction to being reloaded.

When shipping bulk cargo or load, such as coal or ore, bulk naval vessels or ships dedicated for loading bulk cargo are commonly used due to their capability of loading bulk cargo. Bulk vessels are commonly equipped with large cargo holds which are covered by some form of hatch or cover which is opened during loading and unloading of the cargo concerned. When handling bulk cargo, cranes equipped with buckets or similar are commonly used to handle the cargo.

Similarly, large land-based storage facilities are commonly used for storing bulk cargo. In such facilities bulldozers or similar are often used to distribute, reload and unload the bulk cargo.

Moreover, bulk cargo may temporarily be stored and reloaded in so-called hopper systems.

However, more efficient reloading or unloading of bulk cargo may be effectuated by using so-called self-unloader systems, which for example may be installed in vessels or storage facilities. In self-unloader systems the bulk cargo is automatically unloaded form the vessel or cargo space through gates arranged at the bottom of the space or cargo hold. In self-unloader systems, the space used for holding the cargo is typically equipped with steep inclined sidewalls along which the bulk cargo slides towards the gates arranged at the bottom. Form the gates, the bulk cargo is then typically transported away using conveyors, transporters, or feed screws.

In self-unloader systems the bulk cargo is prone to get stuck during unloading of the bulk cargo. There are several reasons for that the bulk cargo can get stuck during unloading. One reason resides in that the side walls of the space used for holding the cargo is not steep enough. Another reason is that the side walls of space used for holding the cargo exhibits a too high friction due to clogging or sticking of material. Yet another reason is that the bulk cargo forms walls when being unloaded. Yet another reason is that the bulk cargo forms arches e.g. over the gates. Yet another reason is that the material properties of the bulk cargo do not allow free flow due to high internal friction and for that reason arches e.g. over the gates. This means that the region closest to the gate may be emptied but the material forms a self-supporting arch above the gate, hence resulting in that the bulk cargo cannot easily be unloaded.

In order to reduce the above problems, it is common practice to use steep sidewalls and to employ the sidewalls with vibrators attached thereto. This arrangement reduces the risk of the bulk cargo getting stuck during unloading. However, other drawbacks typically arise when utilizing this approach.

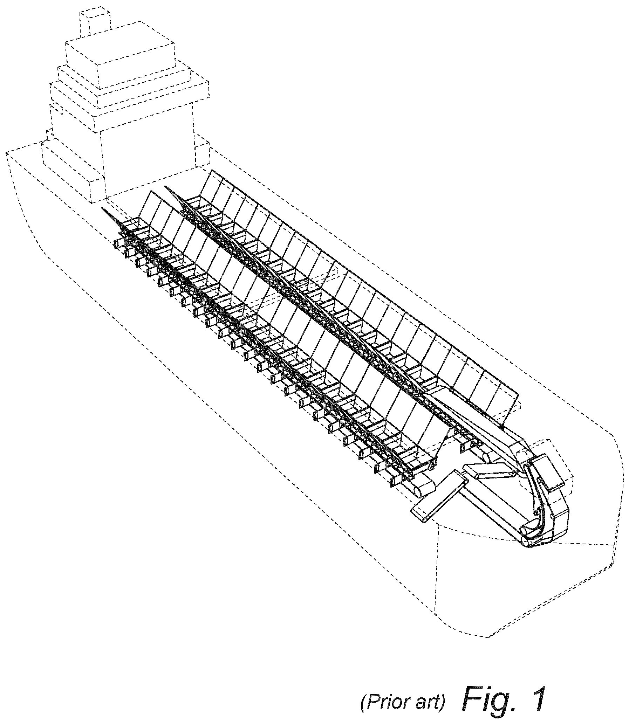

Fig. 1 schematically illustrates a partial perspective cross sectional view of a ship according to prior art. The depicted ship, mainly shown in phantom, has a deadweight tonnage of about 8600 tonnes and a gross load capacity of about 11300 cubic meters. More specifically, Fig. 1 illustrates the cargo hole of a bulk loader equipped with a self-unloader system. As can be seen in Fig. 1, the steep side walls of the cargo hole bring about that valuable space in the interior of the ship cannot be used for storing cargo at the sides of the ship as well as in the middle. Moreover, in order to not waste too much space, the ship has been equipped with two parallel sets of gates, one on the starboard side and one on the portside of the ship. The use of parallel gate sets results in that multiple sets of conveyors must be used below the gates. The use of multiple parallel conveyors results in that cross conveyors, extending in a transversal direction of the ship are needed to feed the bulk cargo to the C-shaped conveyor used to lift and transfer bulk cargo out of the ship. The use of multiple conveyors is both costly and increases the number of moving parts, hence increasing maintenance, risk of malfunction and costly downtime.

Further, vibrators are attached to the steep sidewalls of the ship in Fig. 1. This arrangement of the vibrators results in undesired body sound or structure sound as well as premature material fatigue. A vibrator may induce as much as 300kN of centripetal force of which a major portion is absorbed by the sidewalls and the support structure. The vibrational energy from the vibrators being transferred to the sidewalls and the support structure will inevitably cause the sidewalls and the support structure to vibrate. Such vibrations will cause a significant amount of noise which result in risks for personal operating the system. Further such vibrations require very rigid support structures or else the lifetime will be reduced owing form premature material fatigue. Such require very rigid support structures means that a lot of material will have to be used in the support structure in order to achieve a desired lifetime. Also, the attachment of the support structure to it surroundings, such as to a hull of a ship, must be very rigid in order to last over time. Also, in this regard, a lot of material will have to be used for attaching the support structure to its surroundings.

Similar or the same problems arise when utilising land-based self-unloader systems with steep sidewalls and vibrators and in hopper systems employed with steep sidewalls and vibrators.

US 2010/0272543 A1 suggests using less steep sidewalls in combination with an array of individual surface segments provided with vibrating units. The individual surface segments are in turn supported by a dedicated support structure in order to form a funnel like structure sloping towards an exit. The described system thus offers more load capacity. However, the described system is very complicated and expensive to build. Further, the described system still induces undesired body sound or structure sound as well as premature material fatigue owing form the vibrating units. By fixing the vibrating units in the support structure, the ability of the vibrating units to propagate vibrations to e.g., bulk material will be significantly hampered, hence reducing the effect of the vibrating units.

US 4 907 721 discloses a bulk silo for grains and particulate material including a slandered floor which slanters towards a set of spouts. The slandered floor includes vibrators connected to plates for vibrating the same. Each spout is formed like a tunnel through which the grains or particulate material is allowed to flow towards a chain conveyor. Further, each spout is employed with gate for controlling a flow of grains therethrough. However, such spouts may be prone to clogging.

US 2009/0260539 A1 discloses a vibratory floor consisting of independent vibratory modules that can be pre-fabricated and put into place in structures for storage or transport of bulk products. Each vibratory module consists of a frame in which a support material is arranged. A metal sheet is mounted on the support material. The metal sheet is attached to a vibratory element and held in place by a peripheral sealing to provide for that the vibratory modules are dust tight. However, such modules may be prone to transmitting vibrations to its surroundings.

JP 2002 326722 A discloses waste discharging device. Waste is dropped into the device such that it hits a triangular cylindrical member before hitting a steel plate chute of a hopper. The triangular cylindrical member and the hopper are provided with low-frequency vibrating motors such that wastes dropped on each member are loosened by the vibration of the motors. Further rubber cushions are mounted between a lower stand and the triangular cylindrical member and the hopper.

EP 2 716 581 A1 discloses a vibratory floor section, including a planar base, and a top plate arranged to overlie at least a portion of the base. A vibration mechanism is configured to vibrate the top plate in relation to the base. At least one resilient device is configured to support the top plate on the base. The resilient device has a first end mounted to the base and a second end supporting the top plate, thereby enabling the top plate to adopt a lifted state relative to the base when substantially unloaded and a fully depressed state when loaded above a predetermined amount. However, such floor sections may be prone to transmitting vibrations to its surroundings.

Hence, there is a need for an improved storage and reclaim system for bulk material.

### Summary of the invention

With the above in mind, it is an object of the present invention to provide an improved storage and reclaim system for bulk material as well as a use of the system and a vessel, a land-based storage and a hopper including the system.

Another object is to provide such a storage and reclaim system for bulk material which occupies less space.

Another object is to provide such a storage and reclaim system for bulk material which simplifies unloading form the storage and reclaim system.

Another object is to provide such a storage and reclaim system for bulk material which allow for handling of bulk material with high internal friction.

Another object is to provide such a storage and reclaim system for bulk material which reduces body sounds.

Another object is to provide such a storage and reclaim system for bulk material which reduces transfer of vibrations to its surroundings.

Another object is to provide such a storage and reclaim system for bulk material which reduces material fatigue of the system and surrounding components.

Another object is to provide such a storage and reclaim system for bulk material which reduces the number of auxiliary components used when unloading bulk cargo form the storage and reclaim system.

To achieve at least one of the above objects and also other objects that will be evident from the following description, a storage and reclaim system for bulk material having the features defined in claim 1 is provided according to the present inventive concept. A vessel including a storage and reclaim system for bulk material is provided according to claim 16. A land-based storage including a storage and reclaim system for bulk material is provided according to claim 17. A hopper including a storage and reclaim system for bulk material is provided according to claim 18. A use of a storage and reclaim system is provided according to claim 19. Preferred variations of the inventive concept will be evident from the dependent claims.

More specifically, according to claim 1, there is provided a storage and reclaim system for bulk material, said system comprising: a bulk material holding space having a bottom portion provided with a discharge port, wherein the bottom portion comprises an inclined support plate for supporting the bulk material and for assisting gravity induced feeding of the bulk material towards the discharge port, a support structure supporting the support plate, and one or more vibrators connected to the support plate and configured to transfer vibrational energy to the support plate to induce a vibrational movement of the support plate, wherein the support plate is supported by the support structure in a free-floating manner, an intermediate layer arranged between the support structure and the support plate, the intermediate layer having vibration isolating properties such that transmission of vibrations from the support plate to the support structure is counteracted, characterized by that, the support plate is inclined with an angle in the range of 15-25 degrees with respect to a horizontal plane, the support structure is damped connected to a major structure by at least one structure vibration damper such that transmission of vibrations from the storage and reclaim system to the major structure is counteracted.

Hereby an improved storage and reclaim system for bulk material is provided.

The storage and reclaim system is designed for, and hence suitable to be used with bulk material in general.

Further, the storage and reclaim system is advantageous in that it is designed to be capable of handling bulk materials exhibiting a high internal friction also referred to as a high internal sticking. Hence, the storage and reclaim system is designed to efficiently handle bulk materials which are prone to sticking and clogging during handling such as unloading. Non-limiting examples of such bulk materials are wood chips and saw dust which are prone to arching and walling during handling.

By "arching" is meant that the bulk material may form a self-supporting arch traversing a void space. This means that the bulk material may form an arch for instance over a discharge port such that the arch prevents the bulk material from reaching the discharge port.

By "walling" is meant that the bulk material forms a self-supporting steep wall. This means that the bulk material may form a wall-like structure which may prevent the material from flowing towards e.g. a discharge port. For instance, wood chips may form walls having more or less vertical faces which may be exceed ten meters in height.

Furthermore, the storage and reclaim system is advantageous in that it is provided with vibration damping counteracting transmission of vibrations within the system as well as to the major structure to which the storage and reclaim system is connected. More specifically, the storage and reclaim system is provided with a dual vibration damping which includes an intermediate layer arranged between the support structure and the support plate as well as at least one structure vibration damper connecting the support structure to the major structure. By this dual damping efficient counteraction of transmission of vibrations within the storage and reclaim system as well to its surroundings, in form of the major structure, may be achieved.

By "major structure" is meant any structure to the which the storage and reclaim system is connected. The major structure may in turn be connected to another structure. In case of a vessel or ship, the major structure may be the hull of the vessel, a tank of the vessel such as a wing tank, a bottom of the hull, a freeboard of the hull or similar. The major structure may be the foundation of a land-based storage. The major structure may be the ground. The major structure may be quay, a road, a deck of a vessel, a foundation, a tower, a crane or similar in case of a hopper.

The storage and reclaim system comprises a bulk material holding space. The bulk material holding space is typically designed to hold bulk cargo during transport, storage and/or handling. The bulk cargo holding space may for example be a cargo hold of a vessel or ship, a warehouse or storage facility, a hopper, a storage tower, a train carriage or a truck wreckage.

Hence, the bulk cargo may be static in the bulk material holding space for prolonged time such as when transported in a ship or when stored in a storage facility. Further, the bulk cargo may flow through the bulk material holding space or be static for only a short period of time such as when handled in a hopper. The size, shape and design of the bulk material holding space may consequently vary greatly.

The bulk material holding space has a bottom portion which is provided with a discharge port or gate. The discharge port is typically used to extract bulk material from the bulk material holding space by opening the discharge port such that the bulk material is allowed to flow or fall out of the bulk material holding space through the discharge port.

The bottom portion of the bulk material holding space comprises an inclined support plate for supporting the bulk material and for assisting gravity induced feeding of the bulk material towards the discharge port. Hence, the bulk material may travel along the inclined support plate towards the discharge port while being supported by the inclined support plate. The inclination of the inclined support plate brings about that the gravity force acting on the bulk material will assist the bulk material in being fed towards the discharge port.

The support plate is supported by a support structure. The support structure may be any structure capable of supporting the support plate. The support structure may include one or more plates supporting the support plate. The support structure may include one or more beams supporting the support plate. The support structure may include one or more grids supporting the support plate. The support structure may include a combination of one or more load carrying structures such as plates, beams, and grids.

One or more vibrators are connected to the support plate. The vibrators are configured to transfer vibrational energy to the support plate. The vibrators may thus induce a vibrational movement of the support plate. The vibrational movement of the support plate will propagate into the bulk material supported by the support plate. The vibrational movement propagated into the bulk material will consequently vibrate or shake the bulk material or at least a part of the bulk material. By vibrating the bulk material, arching and walling of the bulk material is counteracted hence resulting in that the bulk material is less prone to sticking and clogging. By vibrating the bulk material, arches and wall of the bulk material may be made to collapse hence resulting in that the bulk material is counteracted from sticking and clogging.

Any number of vibrators including one may be used to advantage. The vibrators may be of any suitable kind. The vibrators may be hydraulically driven. The vibrators may be pneumatically driven. The vibrators may be electrically driven. The vibrators may be electromagnetically driven. The vibrators may be adjustable. A vibration power of the vibrators may be adjusted. A vibration force of the vibrators may be adjusted. A vibration amplitude of the vibrators may be adjusted. A vibration frequency of the vibrators may be adjusted. A vibration time of the vibrators may be adjusted, to give a few non-limiting examples. The vibrators may be adjusted based on the bulk material at hand such that an efficient feeding of the bulk material towards the discharge port is achieved. For instance, the vibrational amplitude may have to be increased for materials having large internal friction. Similarly, the vibrational amplitude may potentially be lowered for materials having a limited internal friction.

The support plate is inclined with an angle in the range of 15-25 degrees with respect to a horizontal plane. Hereby an efficient storage and reclaim system may be realized while using less space.

The support plate is supported by the support structure in a free-floating manner.

By "free floating manner" is meant that the support plate is supported by the support structure such that it may vibrate independently of the support structure or may vibrate substantially independently of the support structure. The support plate is thus supported in a fashion where its contact surface with the support structure is free or substantially free. In other words, the support plate may rest freely on the support structure. The support plate may be restricted to move in a plane thereof with respect to the support structure. This arrangement of the support plate brings about that at least a central major portion of the support plate is free of any connections or couplings to other entities or objects such as the support structure.

By this arrangement, the vibrators may efficiently transfer vibrational energy the support plate while limiting the amount of vibrational energy being transferred to the support structure. Hence, less vibrations are consequently transferred to the surroundings which efficiently mitigates body sounds and premature material fatigue. For natural reasons, a limited amount of the vibrational energy transferred by the vibrators may be transferred to the surroundings.

Since the support plate is supported in a free-floating manner, vibrational energy may be efficiently transferred to the bulk cargo and even so with a significantly increased amplitude. This brings about that arching, and walling may be mitigated even more efficiently and that the bulk material may travel more easily towards the discharge port. Moreover, since the support plate is supported in a free-floating manner, materials with high internal friction which cannot flow without added energy in the form of vibration may advantageously be handled by the storage and reclaim system. Hence, the inclination of the support plate may be reduced bringing about that less space is occupied by the storage and reclaim system. As a result, the bulk material holding space may be made wider without wasting too much space. As a further result of the reduced inclination of the support plate, arching of the bulk material may be mitigated.

An intermediate layer is arranged between the support structure and the support plate, the intermediate layer having vibration isolating properties such that transmission of vibrations from the support plate to the support structure is counteracted. By arranging an intermediate layer between the support structure and the support plate several advantages may be achieved since the intermediate layer has vibration isolating properties. As is well known, sound is a kind of vibration, which means that the intermediate layer also has sound attenuating properties. This means that the provision of the intermediate layer may reduce an overall sound level and/or mitigating propagation of undesired noise. The intermediate layer may reduce an overall vibration level of the support structure and any entities connected thereto, such as the major structure. Further, propagation of undesired vibrations may be reduced within the storage and reclaim system as well as externally of the storage and reclaim system. An intermediate layer between the support structure and the support plate may thus reduce body sounds efficiently. An intermediate layer between the support structure and the support plate may reduce material fatigue. The intermediate layer may have wear resistant properties, hence reducing wear of the support structure and the support plate. Examples of suitable materials for the intermediate layer include polyurethane, polyurethane elastomer, mixed cell polyurethane elastomer, closed cell polyurethane elastomer, open cell polyurethane elastomer, rubber, natural rubber, synthetic rubber, polymers, **PTFE,** and steel-based energy absorbing materials. The intermediate layer may include a plurality of materials.

The support structure is damped connected to the major structure by at least one structure vibration damper such that transmission of vibrations from the storage and reclaim system to the major structure is counteracted. By the provision of at least one structure vibration damper transmission of vibrations from the storage and reclaim system to the major structure may be efficiently counteracted. This means that the provision of the at least one structure vibration damper may reduce an overall sound level and/or mitigating propagation of undesired noise. The at least one structure vibration damper may reduce an overall vibration level of the major structure. Further, propagation of undesired vibrations may be reduced particularly externally of the storage and reclaim system. At least one structure vibration damper between the support structure and the main structure may thus reduce body sounds efficiently. At least one structure vibration damper between the support structure and the main may reduce material fatigue. Examples of suitable materials for the structure vibration damper include, steel-based energy absorbing materials, stainless steel, polyurethane, polyurethane elastomer, mixed cell polyurethane elastomer, closed cell polyurethane elastomer, open cell polyurethane elastomer, rubber, natural rubber, synthetic rubber, polymers, and PTFE.

**An** abutment vibration damper **may be** arranged between the support plate and the support structure and configured to prevent translation of the support plate downwards towards the discharge port. The provision of the abutment vibration damper provides for that the support plate is prevented from sliding towards the discharge port while at the same time being damped with respect to the support structure.

The structure vibration damper may include a plurality of materials.

The structure vibration damper may include a plurality of damping bodies or elements arranged in series and/or in parallel.

The support plate may be inclined with an angle in the range of 5-30 degrees with respect to a horizontal plane. The support plate may be inclined with an angle in the range of 17-23 degrees with respect to a horizontal plane. The support plate may be inclined with an angle of about 20 degrees with respect to a horizontal plane.

The support plate may be inclined with an angle in the range of 5-40 degrees with respect to a horizontal plane. The support plate may be inclined with an angle in the range of 5-50 degrees with respect to a horizontal plane. The support plate may be inclined with an angle in the range of 5-60 degrees with respect to a horizontal plane. The support plate may be inclined with an angle in the range of 20-30 degrees with respect to a horizontal plane. The support plate may be inclined with an angle of about 30 degrees with respect to a horizontal plane.

At least one structure vibration damper may be arranged at any interface between the support structure and the major structure, which is advantageous in that transmission of vibrations from the storage and reclaim system to the major structure is further counteracted. In other words, the support structure of the storage and reclaim system may solely be connected to the major structure by damped connections.

The abutment vibration damper may be attached to the support plate and abut an abutment surface of the support structure, which is advantageous in that the support plate is prevented from sliding towards the discharge port while at the same time being damped with respect to the support structure. The abutment vibration damper may thus be fixedly attached to the support plate and abut an abutment surface of the support structure. The abutment vibration damper may abut the abutment surface of the support structure owing from the inclination angle of the support plate since the support plate will through gravity strive in a direction towards the discharge port.

The abutment vibration damper may be attached to the support structure and abut an abutment surface of the support plate, which is advantageous in that the support plate is prevented from sliding towards the discharge port while at the same time being damped with respect to the support structure. The abutment vibration damper may thus be fixedly attached to the support structure and abut an abutment surface of the support plate. The abutment vibration damper may abut the abutment surface of the support plate owing from the inclination angle of the support plate since the support plate will through gravity strive in a direction towards the discharge port.

The abutment vibration damper may be attached to the support structure and the support plate.

The support structure may comprise a backing plate, wherein the support plate rests on the backing plate, which is advantageous in that the support plate may be supported by the backing plate in a secure manner. By supporting one plate on another plate via the intermediate layer, the indirect contact surface between the two plates may be maximized. This may reduce vibration induced wear and/or the risk of deforming the support plate.

The abutment vibration damper may extend through an opening and/or a slot in the backing plate, which is advantageous in that the abutment vibration damper may extend down below the backing plate and engage an abutment surface of the support structure. By this arrangement, a strong and reliable interaction between the support plate and the support structure may be achieved while influencing the backing plate to a limited amount.

Each vibrator may be connected to a major surface of the support plate facing away from the bulk material holding space, which is advantageous in that the vibrators or vibrator may efficiently transfer vibrational energy to the support plate to induce a vibrational movement of the support plate without interfering with the bulk material holding space. Hence, the vibrators may not occupy any space in the bulk material holding space. The vibrators may not disturb a flow of bulk material being fed towards the discharge port of the bulk material holding space. The vibrators may be less sensitive to contamination of bulk material.

Each vibrator may extend through an opening in the support structure, which is advantageous in that the vibrators or vibrator may efficiently transfer vibrational energy to the support plate to induce a vibrational movement of the support plate with a minimal impact on the support structure.

The intermediate layer may comprise an elastomeric material, which is advantageous in that transmission of vibrations from the support plate to the support structure may be efficiently counteracted.

The intermediate layer may have progressive compression characteristics by the intermediate layer including at least two different materials of different thicknesses arranged side by side in the intermediate layer, and/or by the intermediate layer including at least two different materials stacked on top of each other, and/or by the intermediate layer being textured, which is advantageous in that the intermediate layer is capable of handling large loads while still not being excessively compressed.

The intermediate layer may include at least two different materials of different thicknesses arranged side by side in the intermediate layer. By including a thicker and softer material side by side a thinner and harder material, the intermediate layer may be made to counteract transmission of vibrations from the support plate to the support structure over a wide range of loads. The ticker and softer material may be compressed even when the intermediate layer is subjected to small loads and may thus provide for that transmission of vibrations from the support plate to the support structure is counteracted. The thinner and relatively speaking harder material may, in addition to the thicker and softer material, be compressed when the intermediate layer is subjected to larger loads and may thus provide for that transmission of vibrations from the support plate to the support structure is counteracted over a large range of loads. The respective materials may be provided in any suitable pattern, including but not limited to, material stripes, material lattices, material islands surrounded by a different material, material islands of different materials and similar.

The intermediate layer may include at least two different materials or layers stacked or arranged on top of each other. The plurality of layers may or may not be connected to each other. The plurality of layers may have different properties including sound attenuating properties, vibration isolating properties and wear resistant properties. An upper material or layer may be softer as compared to a lower material or layer. By this design, the upper softer layer may be compressed even when the intermediate layer is subjected to small loads and may thus provide for that transmission of vibrations from the support plate to the support structure is counteracted. The lower relatively speaking harder layer may be compressed when the intermediate layer is subjected to larger loads and may thus provide for that transmission of vibrations from the support plate to the support structure is counteracted over a large range of loads.

The intermediate layer may be textured. For instance, the intermediate layer may have a textured or patterned surface, where some portions are higher than others. A wavy or striped surface may be used to advantage. By this design, the higher portions may be compressed even when the intermediate layer is subjected to small loads and may thus provide for that transmission of vibrations from the support plate to the support structure is counteracted. The lower portions may be compressed when the intermediate layer is subjected to larger loads and may thus provide for that transmission of vibrations from the support plate to the support structure is counteracted over a large range of loads.

The structure vibration damper may comprise a metal based damping body having progressive compression characteristics, which is advantageous in that the structure vibration damper may handle large loads while still exhibiting desired damping characteristics. Moreover, a long lifetime of the structure vibration damper may be realized since the risk of overloading the structure vibration damper is significantly reduced by the metal based damping body having progressive compression characteristics.

The abutment vibration damper may comprise an elastomeric body arranged between attachment brackets, which is advantageous in that an abutment vibration damper capable of handling large shear loads may be realized with a reduced risk of the abutment vibration damper being displaced accidentally.

The structure vibration damper may comprise an elastomeric body arranged between attachment brackets, which is advantageous in that a structure vibration damper capable of handling large shear loads may be realized with a reduced risk of the structure vibration damper being displaced accidentally.

The structure vibration damper, and, if present, the abutment vibration damper may be replaceable, which is advantageous in that the respective dampers may be replaced if worn down or otherwise damaged.

The system may further comprise a clamping profile clamping a peripheral portion of the support plate and being attached to the of the support structure, the clamping profile accommodating a vibration damping lining arranged between the peripheral portion of the support plate and the clamping profile, which is advantageous in that the interface between the support plate and the clamping profile may be vibration damped thereby further counteracting transmission of vibrations from the support plate to the support structure. Further, the support plate may be held in position relative to the support structure. Further, the use of a clamping profile may result in that the support plate is free to move in a plane thereof. The use of a clamping profile may result in that the support plate is free to move a limited extent in a plane thereof. Furthermore, the use of a clamping profile may bring about that the support plate is sealed with respect to the support structure and/or any underlying structure such that the bulk material is counteracted from unintentionally exiting the bulk material holding space.

The discharge port may further comprise one or more inclined discharge port plates for guiding the bulk material and for assisting gravity induced feeding of the bulk material towards the discharge port, wherein each discharge port plate is inclined with an angle in the range of 30-70 degrees with respect to a horizontal plane, wherein one or more vibrators are connected to each discharge port plate and configured to transfer vibrational energy to the discharge port plate to induce a vibrational movement of the discharge port plate, wherein each discharge port plate is supported by the support structure in a free-floating manner, and wherein the intermediate layer is further arranged between the support structure and the one or more discharge port plates. By this arrangement the discharge of the bulk material through the discharge port may be facilitated. The combination of a support plate and one or more inclined discharge port plates brings about that the bulk material may flow more easily out through the discharge port. If the support plate is inclined less than the one or more inclined discharge port plates, arching of the bulk material may be further counteracted. Arching may be reduced since the support plate will exhibit a reduced capability of receiving forces transversal to a horizontal plane. In other words, the support plate will not be able to support a material arch as effective as when steep side walls are used. The one or more vibrators may be configured to transfer vibrational energy to the discharge port plate to induce a vibrational movement of the discharge port plate. Each discharge port plate may be supported by the support structure in a free-floating manner. By this arrangement the discharge of the bulk material through the discharge port may be facilitated further. Any number of vibrators including one may be used to advantage. Reference regarding the vibrators and how each discharge port plate is supported by the support structure in a free-floating manner is made to the above. By arranging the intermediate layer between the support structure and the one or more discharge port plates, transmission of vibrations from the one or more discharge port plates to the support structure may be counteracted.

The system may further comprise a further abutment vibration damper arranged between the one or more discharge port plates and the support structure, and configured to prevent translation of the one or more inclined discharge port plates downwards towards the discharge port, which is advantageous in that the one or more discharge port plates are prevented from sliding towards the discharge port while at the same time being damped with respect to the support structure.

The further abutment vibration damper may be attached to the one or more discharge port plates and abut a further abutment surface of the support structure, which is advantageous in that the one or more discharge port plates are prevented from sliding towards the discharge port while at the same time being damped with respect to the support structure. The further abutment vibration damper may thus be fixedly attached to the one or more discharge port plates and abut an abutment surface of the support structure. The abutment vibration damper may abut the abutment surface of the support structure owing from the inclination angle of the one or more discharge port plates since the one or more discharge port plates will through gravity strive in a direction towards the discharge port.

The system may further comprise an additional inclined support plate for supporting the bulk material and for assisting gravity induced feeding of the bulk material towards the discharge port form an opposite side thereof, which is advantageous in that a discharge port may be fed with material from more than one direction.

The additional support plate may comprise one or more vibrators connected to the support plate and configured to transfer vibrational energy to the support plate to induce a vibrational movement of the support plate, wherein the additional support plate is supported by the support structure in a free-floating manner. Advantages related to the additional support plate is largely analogous to those of the support plate why reference is made to the above.

Each vibrator may be independently controllable, which is advantageous in that the vibrational movement of the support plate, if present the discharge port plate and if present the additional support plate may be controlled such that an efficient gravity induced feeding of the bulk material towards the discharge port is achieved. It is thus possible to induce a vibrational movement at a certain area of the support plate if present the discharge port plate and if present the additional support plate. It is thus possible to operate the vibrators in a certain sequence aiming at achieving an efficient feeding of the bulk material towards the discharge port. Moreover, properties of an induced vibrational movement may be altered to suit different needs. For instance, amplitude, frequency, and operation time may be controlled for each vibrator independently. The fact that each vibrator may be independently controllable also brings about that energy may be saved since the vibrators may only be operated when needed. The fact that each vibrator may be independently controllable also brings about that energy may be saved since the vibrators may only be operated at certain power. The fact that each vibrator may be independently controllable also brings about that undesired body sound and/or vibrations may be reduced since the vibrators may only be operated when needed.

The system may further comprise a conveyor arranged below the bottom portion of the bulk material holding space for receiving bulk material from the bulk material holding space via the discharge port, which is advantageous in that the bulk material of the bulk material holding space may be conveyed away after leaving the bulk material holding space via the discharge port. The bulk material may for instance be conveyed out of a vessel or a storage facility or warehouse.

According to another aspect of the invention, there is provided a vessel comprising a storage and reclaim system according to the first aspect. In general, features of this aspect provide similar advantages as discussed above in relation to the first aspect. Consequently, said advantages will not be repeated in order to avoid undue repetition.

According to another aspect of the invention, there is provided a land-based storage comprising a storage and reclaim system according to the first aspect. **In** general, features of this aspect provide similar advantages as discussed above in relation to the first aspect. Consequently, said advantages will not be repeated in order to avoid undue repetition. However, it may additionally be mentioned that a land-based storage according the invention may have a significantly reduced height as compared to prior art land-based storages. A reduced height may in turn result in an overall increased capacity of the land-based storage. Moreover, such land-based storage may require a less solid foundation in relation to prior art storages owing from the above-described vibration damping.

According to another aspect of the invention, there is provided a hopper comprising a storage and reclaim system according to the first aspect. **In** general, features of this aspect provide similar advantages as discussed above in relation to the first aspect. Consequently, said advantages will not be repeated in order to avoid undue repetition. However, it may additionally be mentioned that a hopper according the invention may have a significantly reduced height as compared to prior art hoppers. A reduced height may in turn result in an overall increased capacity of e.g. load system including a grabber attached to a crane, since the crane may not have to hoist the grabber as high as when using a prior art hopper. Another advantage resides in that the hopper may have a reduced weight and may include less material as compared to a prior art hopper. Further, the hopper may require less sturdy connections to the surroundings owing from the above-described vibration damping.

According to another aspect of the invention, there is provided a use of a storage and reclaim system according to the first aspect for handling of bulk material chosen from group consisting of: wood chips, wood pellets, sawdust, coal, ore, gypsum rock, bauxite, alumina, cement, sand, gravel, crushed rock, salt, grains and aggregates. Hence, the storage and reclaim system according to the first aspect may be used for a large variety of materials. **In** general, features of this aspect provide similar advantages as discussed above in relation to the first aspect. Consequently, said advantages will not be repeated in order to avoid undue repetition.

### Brief Description of the Drawings

The above, as well as additional objects, features and advantages of the present inventive concept, will be better understood through the following illustrative and non-limiting detailed description of preferred variants of the present inventive concept, with reference to the appended drawings, where the same reference numerals will be used for similar elements, wherein:
Fig. 1 conceptually illustrates a partial perspective cross sectional view of a ship according to prior art equipped with a self-unloader system.
Fig. 2 conceptually illustrates a partial perspective cross sectional view of a vessel equipped with storage and reclaim system according to the present inventive concept.
Fig. 3 conceptually illustrates a perspective view of a portion of the cargo hole of the vessel of Fig. 2.
Fig. 4 conceptually illustrates a perspective view of a portion of a storage and reclaim system according to the present inventive concept.
Fig. 5 conceptually illustrates a perspective view of a portion of a storage and reclaim system according to the present inventive concept.
Fig. 6 conceptually illustrates different designs of an intermediate layer used in a storage and reclaim system according to the present inventive concept.
Fig. 7 conceptually illustrates a perspective view of a land-based storage equipped with storage and reclaim system according to the present inventive concept.
Fig. 8 conceptually illustrates a perspective view of a hopper equipped with storage and reclaim system according to the present inventive concept.

### Detailed Description

The present inventive concept will now be described more fully hereinafter with reference to the accompanying drawings, in which preferred variants of the inventive concept are shown. This inventive concept may, however, be embodied in many different forms and should not be construed as limited to the variants set forth herein; rather, these variants are provided for thoroughness and completeness, and fully convey the scope of the inventive concept **as** defined by the appended claims to the skilled person. Like reference numerals refer to like elements throughout the description.

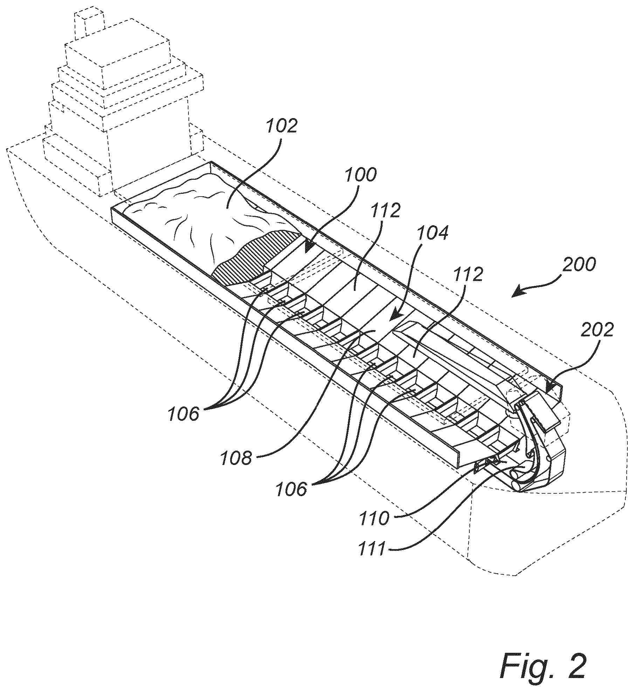

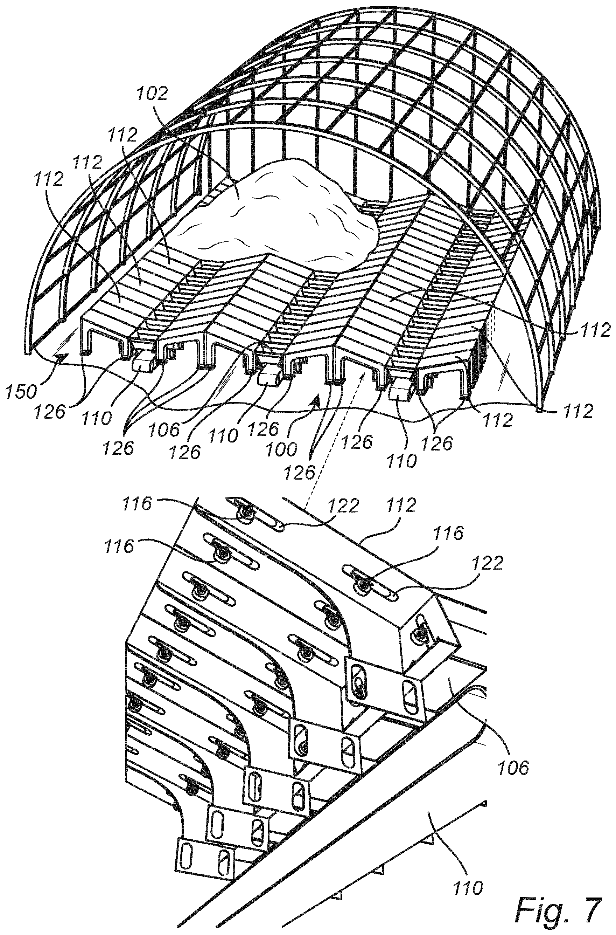

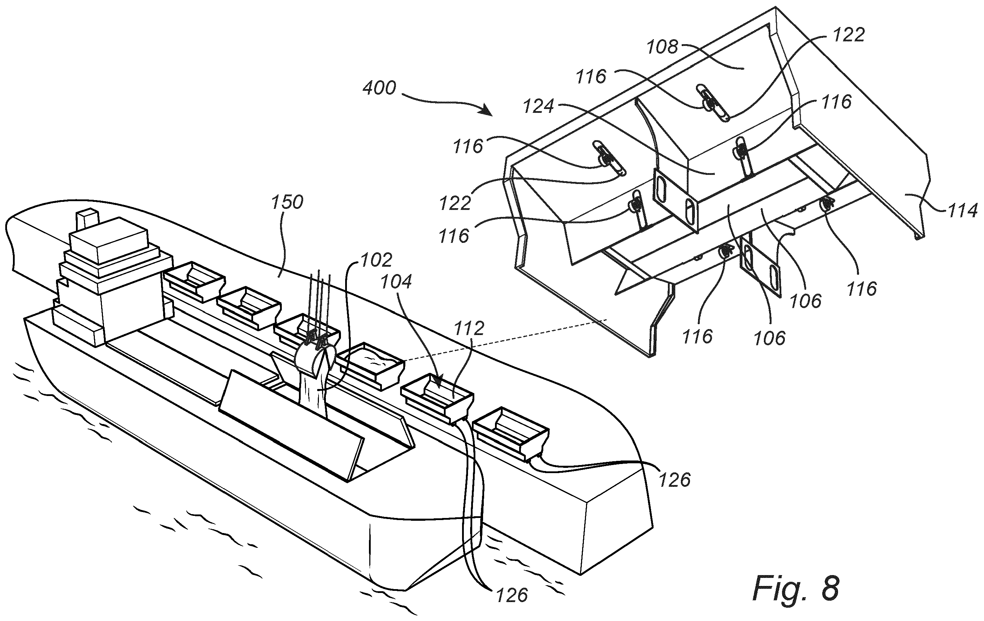

Initially a storage and reclaim system 100 will be described with reference to Figs. 2-4. The storage and reclaim system 100 will be described in a context where the storage and reclaim system 100 is installed in a vessel 200. However, the storage and reclaim system 100 may be used in a number of different applications and application areas. Examples of this will be described below with reference to Figs. 7 and 8. Those described examples are however to be considered as non-limiting meaning that the storage and reclaim system 100 may be equally well be used in e.g. a warehouse, a storage tower, a train carriage, a truck wreckage or similar.

The vessel 200 depicted in Fig. 2, mainly shown in phantom, is a large naval vessel 200 in form of a bulk loader having a deadweight tonnage of about 8600 tonnes and a gross load capacity of about 12500 cubic meters. The vessel 200 is consequently designed to transport bulk material 102 in its material holding space 104 commonly referred to as a cargo hole or a cargo hold. The material holding space 104 may be sectionalised and hence include several portions together forming the material holding space 104.

The vessel 200 is of a so-called self-unloader type meaning that the bulk material 102 may be unloaded from the material holding space 104 automatically by means of a self-unloader system 202 installed in the vessel 200.

The self-unloading system 202 includes among other things the storge and reclaim system 100.

The depicted self-unloading system 202 is a permanently installed system which was installed in the vessel 200 on the wharf when the vessel 200 was built. However, existing vessels may advantageously be retrofitted with self-unloading systems including a storge and reclaim system 100 according to the present inventive concept. Similarly, a storge and reclaim system 100 according to the present inventive concept may advantageously be retrofitted in other applications and application areas.

The bulk material 102 present in the material holding space 104 may be automatically unloaded from the material holding space 104 through a number of discharge ports 106 provided at the bottom of the material holding space 104. In other words, a bottom portion 108 of the material holding space 104 is provided with discharge ports 106. The discharge ports 106 are commonly referred to as gates. The number of discharge ports 106 may vary greatly e.g. depending on the size of the vessel 200 at hand. Tenths and even hundreds of discharge ports 106 may be used to advantage. A single discharge port 106 may be used to advantage e.g. in a small vessel, in a hopper or a storage tower.

The discharge ports 106 of the depicted vessel 200 are arranged along a longitudinal direction of the vessel 200. The discharge ports 106 of the depicted vessel 200 are arranged along a centre line of the vessel 200. Each discharge port 106 may be opened and closed individually. A plurality of discharge ports 106 may be opened and closed at the same time. However, when unloading bulk material 102 from the material holding space 104 it is common practice to open one discharge port 106 at the time.

Each discharge port 106 may as depicted be located above a conveyor 110. Hence, the conveyor 110 is arranged below the bottom portion 108 of the bulk material holding space 104 for receiving bulk material 102 from the bulk material holding space 104 via the discharge ports 106.

At a front end of the vessel 200, the conveyor 110 bends upwards in a C-shape where the conveyor 110 meets and is backed by a lifting conveyor 111. Hence, bulk material 102 traveling on the conveyor 110 is when reaching a front end of the vessel 200 pressed and held between the conveyor 110 and the lifting conveyor 111 such that the bulk material is lifted upwards along the C-shape and further out of the vessel 200. About 500 cubic meters of cargo may be unloaded from the vessel 200 by the conveyor 110 and the lifting conveyor 111. The conveyor 110 may for instance end at a further conveyor arranged above deck of the vessel 200. The conveyor 110 may for instance end at a transport arm arranged above deck of the vessel 200. The conveyor 110 may for instance end at a transport screw arranged above deck of the vessel 200.

When a discharge port 106 is opened, bulk material 102 may consequently fall down on the conveyor 110 and travel along the conveyor 110 until being lifted upwards and out of the vessel 200 by the conveyor 110 and the lifting conveyor 111. In order to have control of the amount of bulk material 102 on the conveyor and to avoid stacking of too much bulk material 102 at a certain point of the conveyor 110 one discharge port 106 is advantageously opened at time.

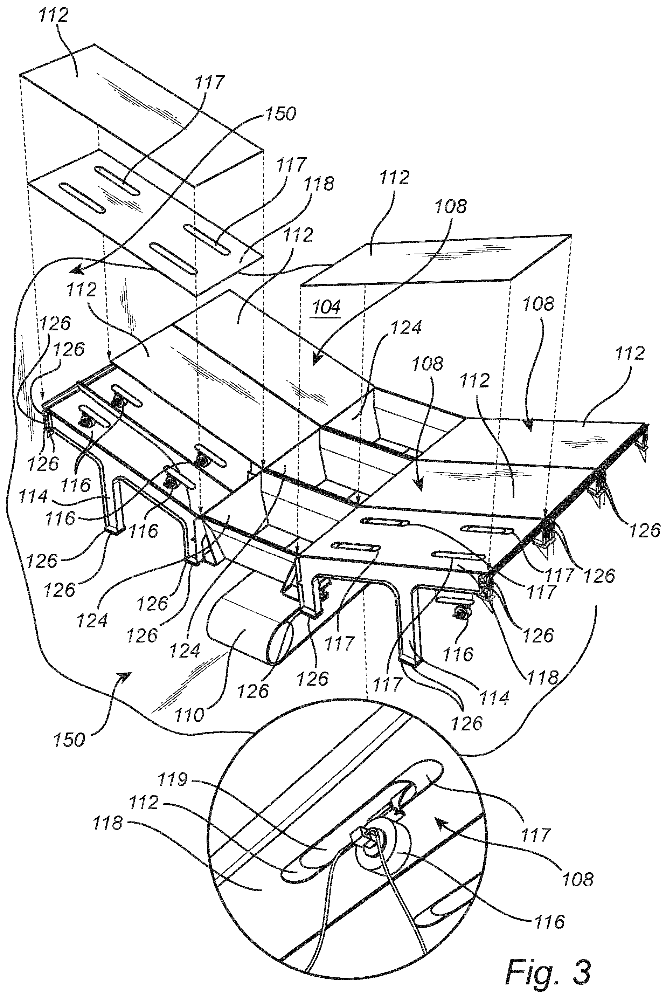

As can be seen in Fig. 3, the bottom portion 108 of the depicted bulk material holding space 104 is employed with a plurality of modules each forming part of storage and reclaim system 100 which in turn forms part of the self-unloading system 202. Each module of the depicted kind in Fig. 3 includes opposite material supporting surfaces in form of support plates 112.

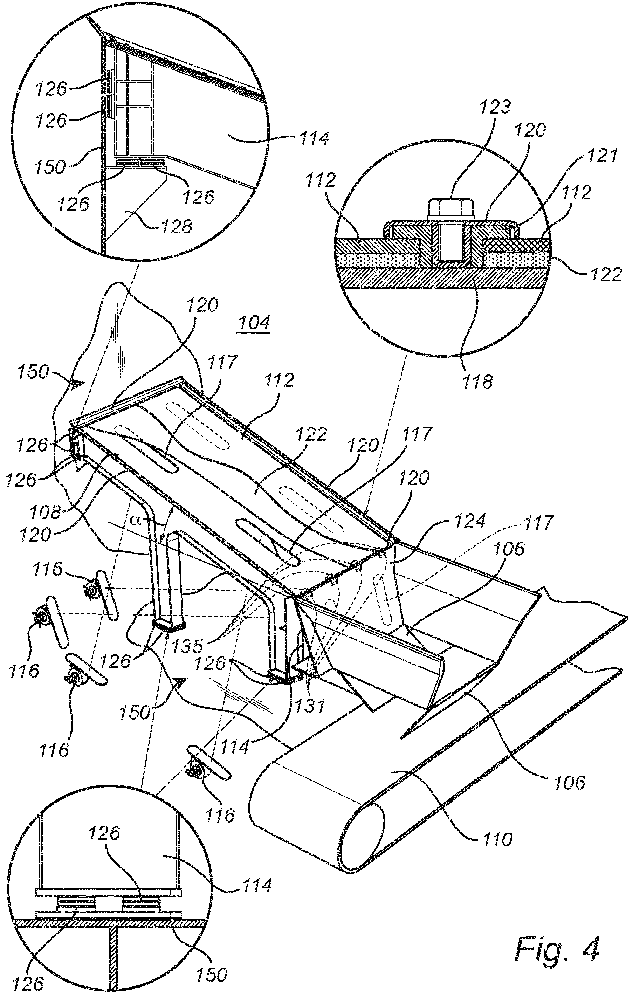

In Fig. 4 one side, e.g. a starboard side, of a module is depicted. The depicted arrangement of Fig. 4 thus corresponds to a portion of the storage and reclaim system 100 of the self-unloading system 202. However, the depicted arrangement of Fig. 4 may very well form a complete storage and reclaim system 100 according to the present inventive concept. In view of this, the arrangement depicted in Fig. 4 will in the following be referred to as a storage and reclaims system 100 although the arrangement forms part of the overall storage and reclaims system 100 of the depicted vessel 200.

Hence, in Fig. 4 it is illustrated a storage and reclaim system 100 for bulk material 102 The system 100 includes a bulk material holding space 104 having a bottom portion 108 as described above. The bottom portion 108 is provided with a discharge port 106. Further, the bottom portion 108 comprises an inclined support plate 112. The support plate 112 is consequently supporting the bulk material 102 in the bulk material holding space 104. The inclined support plate 112 has a further principal purpose apart from supporting the bulk material 102 namely, to assist gravity induced feeding of the bulk material 102 towards the discharge port 106. Hence, the bulk material 102 may flow or travel along the inclined support plate 112 towards the discharge port 106 while being influenced of the gravitational force. The support plate 112 in the depicted system 100 is a steel plate having a thickness of 10 mm. Other thicknesses of the support plate 112 may be used to advantage. For instance, the thickness of the support plate 112 may typically range from 2-20 mm. For instance, the thickness of the support plate 112 may advantageously range from 6-12 mm. Other materials such as aluminium and/or fibre reinforced polymer may be used to advantage in the support plate 112. The support plate 112 may include a plurality of materials.

The support plate 112 is supported by a support structure 114. The support structure 114 has a main purpose of withstanding and carrying the weight of the bulk material 102 present in the material holding space 104. The support structure 114 may be designed in different ways to fulfil this purpose. The support structure 114 may advantageously include metal plates. The support structure 114 may advantageously include metal beams. The support structure 114 may advantageously include a metal grid. The support structure 114 may advantageously be made of other suitable materials, such as fibre reinforced polymer materials.

In the depicted storage and reclaim system 100 of Figs. 2-5, four vibrators 116 are connected to the support plate 112. The vibrators 116 are thus configured to transfer vibrational energy to the support plate 112 to induce a vibrational movement of the support plate 112. Hence, the support plate 112 will start to vibrate once one or more of the vibrators 116 are activated. The vibrators 116 may for example be hydraulic vibrators, pneumatic vibrators, electrical vibrators and/or electromagnetic vibrators. Vibrators 116 of different kinds may be used to advantage. Vibrators 116 of different kinds may be used in combination to advantage. The vibrators 116 may operate according to different working principles. Examples of suitable working principles include, counter-rotating unbalance motors, dual unbalanced exciter gearwheels, linear vibration and triple shaft unbalance exciter designs. The vibrators 116 may operate according to different vibration motions. Examples of suitable vibration motions include linear motions, circular motions, and elliptical motions. The speed and stroke of the vibrators 116 may be adjusted. The speed and stroke of the vibrators 116 may be adjusted individually. The speed and stroke of the vibrators 116 may be adjusted depending on material properties of the bulk material 102 at hand. Typical vibrational G-forces may be 3G to 7G.

The support plate 112 is supported by the support structure 114 in a free-floating manner. Hence, the vibrators 116 may thus transfer vibrational energy to the support plate 112 while influencing the support structure to a limited extent. In other words, the vibrators 116 may to induce a vibrational movement of the support plate 112 but will at the same time affect the support structure 114 thereby causing the support structure 114 to vibrate. The free-floating arrangement of the support plate 112 on the support structure 114 may consequently bring about that the amount of vibrations transferred to the support structure 114 may be significantly reduced as compared to if the support plate 112 were not arranged in a free-floating manner.

In order to further counteract transmission of vibrations from the support plate 112 to the support structure 114, an intermediate layer 122 is arranged between the support structure 114 and the support plate 112. The intermediate layer 122 has vibration isolating properties such that transmission of vibrations from the support plate 112 to the support structure 114 is counteracted. The intermediate layer 122 may serve a number of purposes including sound attenuating, vibration isolation and wear protection.

The depicted intermediate layer 122 is a mixed-cell polyurethane elastomer sold under the tradename of Sylomer ^{®} SR 100 by Getzner. In other words, the depicted intermediate layer 122 comprises an elastomeric material.

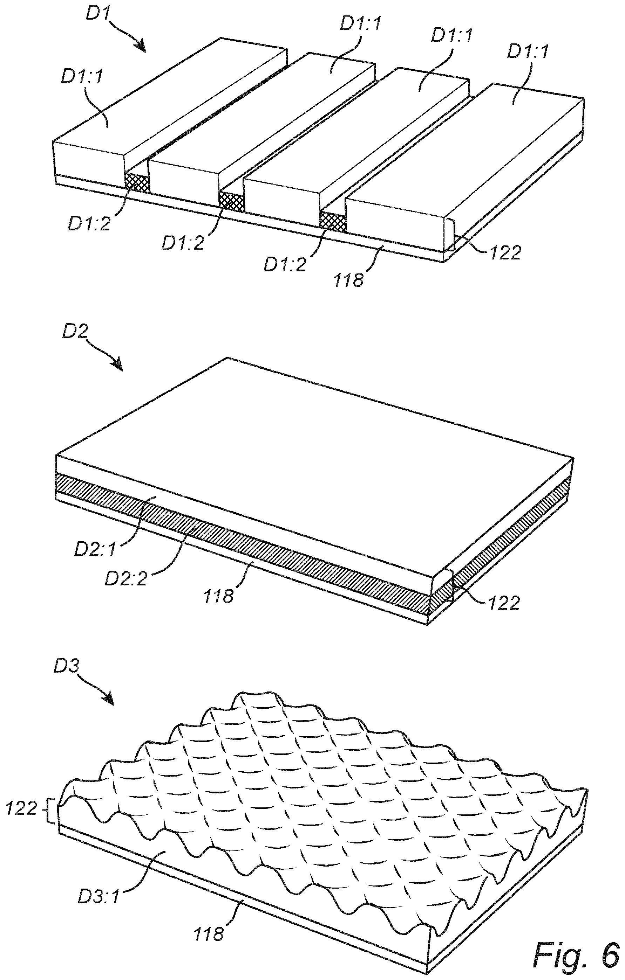

The thickness of the depicted intermediate layer 122 is 25 mm. Other thicknesses such as 12,5 mm may be used to advantage. Further, other types of intermediate layers 122 may be used to advantage. Such other types of intermediate layers may be discussed further below with reference to Fig. 6.

As a result of this design vibrations and body sound in the vessel 200 may be significantly reduced. As a further result material fatigue and premature failure of components of the vessel 200 including the support structure 114 may be significantly reduced.

The support structure 114 is damped connected to a major structure 150 by a number of structure vibration dampers 126. Hereby transmission of vibrations from the storage and reclaim system 100 to the major structure 150 is counteracted. In the depicted vessel 200 of Figs. 2-5, the major structure is more specially the vessel 200 itself. In the depicted vessel 200, the support structure 114 is damped connected to the major structure 150 or hull 150 of the vessel 200. However, the support structure 114 may damped connected to the hull 200 via other entities such as via tanks, frames or beams.

In the depicted storage and reclaim system 100, the respective structure vibration dampers 126 are all metal dampers. More specifically, the depicted dampers are sold under the tradename of VT-GMF by Vibratec^{®}. VT-GMF dampers are available in a plurality of different versions which may be selected based on the needs at hand.

As an alternative, elastic all-metal bodies sold under the tradename of GZD-G-7000 by Vibratec^{®} may be used for the structure vibration dampers 126.

As a further alternative, elastic all-metal bodies sold under the trade name of VT2000 by RG+^{®} may be used for the structure vibration dampers 126. In the latter case, the number of bodies used at each interface may be tailored to suit the needs at hand. Also, the extension and size of the bodies may be tailored to suit the needs at hand. In practice, each individual structure vibration damper 126 or body of the above kinds are designed to handle a static load of about 10 tonnes. As is understood, the number of structure vibration dampers 126 or bodies is typically tailored to suit the load case at hand.

The VT-GMF all-metal damper, as well as the GZD-G-7000 and the VT2000, is formed of a body of a controlled stainless wire "tangle" arranged between two attachment brackets. Thus, this type of structure vibration damper 126 comprises a metal based damping body having progressive compression characteristics. The progressive compression characteristics emanate from the fact that more and more portions of stainless wire is brought into contact with adjacent portions of the stainless wire the more the body of the stainless wire "tangle" gets compressed.

Each leg of the support structure 114 rests on a plurality of structure vibration dampers 126 which in turn rest on the major structure 150. This is best illustrated in the lower inserted partial view of Fig. 4. In practice, four structure vibration dampers 126 are used for each leg in the depicted storage and reclaim system 100 of Figs. 2-5. Any number of structure vibration dampers 126 may be used to advantage.

Similarly, the top portion of the support structure 114 rests on a plurality of structure vibration dampers 126 which in turn rest on console 128 fixedly attached to the major structure 150. This is best illustrated in the upper inserted partial view of Fig. 4. **In** practice, four structure vibration dampers 126 are used for each top portion for the console 128 in the depicted storage and reclaim system 100 of Figs. 2-5. Any number of structure vibration dampers 126 may be used to advantage.

Further, the the top portion of the support structure 114 is backed on the major structure 150, i.e,. a wing tank of the vessel 200, in the horizontal direction via a plurality of structure vibration dampers 126. This is best illustrated in the upper inserted partial view of Fig. 4. **In** practice, four structure vibration dampers 126 are used in the horizontal direction for each top portion in the depicted storage and reclaim system 100 of Figs. 2-5. Any number of structure vibration dampers 126 may be used to advantage.

**In** the depicted storage and reclaim system 100, at least one structure vibration damper 126 is arranged at any interface between the support structure 114 and the major structure 150 as is illustrated in Figs. 3 and 4. With this setup the resulting vibration response in the hull of the vessel 200 has been calculated and was found to be well below the recommended limit values in the Lloyd's Ship Vibration and Noise Guidance Notes.

However, one structure vibration damper 126 or at least one structure vibration damper 126 may be used to advantage, in order to counteract transmission of vibrations from the storage and reclaim system 100 to the major structure 150. However, more than one structure vibration damper 126 is typically used.

At least one structure vibration damper 126 in a single location may be used to advantage, in order to counteract transmission of vibrations from the storage and reclaim system 100 to the major structure 150. However, more than one structure vibration damper 126 in more than one location is typically used.

As a result of this design vibrations and body sound in the vessel 200 may be significantly further reduced. As a further result material fatigue and premature failure of components of the vessel 200 including the support structure 114 and the vessel 200 itself may be significantly reduced.

Further, the induced vibrational movement of the support plate 112 may consequently be transferred to the bulk material 102 supported by the support plate 112. The induced vibrational movement of the support plate 112 may consequently counteract arching and walling of the bulk material 102. The so induced vibrational movement of the support plate 112 may consequently break arches and/or walls formed in the bulk material 102. Hence, the so induced vibrational movement of the support plate 112 may further assist gravity induced feeding of the bulk material 102 towards the discharge port 106.

As is understood form the above, the system 100 typically include an additional inclined support plate 112, apart from the support plate 112 depicted in Fig. 4, for supporting the bulk material 102 and for assisting gravity induced feeding of the bulk material 102 towards the discharge port 106 form an opposite side thereof. Also as understood form the above, the additional support plate 112 typically includes one or more vibrators 116 connected thereto. The vibrators 116 are thus configured to transfer vibrational energy to the additional support plate 112 correspondingly to induce a vibrational movement of the additional support plate 112. Also as understood form the above, the additional support plate 112 is typically supported by the support structure 114 in a free-floating manner.

The depicted support structure 114 comprises a backing plate 118. The support plate 112 rests on the backing plate 118. The backing plate 118 in the depicted system 100 is a steel plate having a thickness of 10 mm. Other thicknesses of the backing plate 118 may be used to advantage. For instance, the thickness of the backing plate 118 may typically range from 8-20 mm. Other materials such as aluminium and/or fibre reinforced polymer may be used to advantage in the backing plate 118. The backing plate 118 may include a plurality of materials.

In other variants the support plate 112 may for instance rest on beams or on a grid.

Each depicted vibrator 116, of the four vibrators 116, is connected to a major surface of the support plate 112 facing away from the bulk material holding space 104. In other words, the vibrators 116 are all arranged on an underside of the support plate 112. To realize this, each depicted vibrator 116 extends through an opening 117 in the support structure. This arrangement of the vibrators 116 brings about that the vibrators are all located outside of the bulk material holding space 104 having. Hence, the presence of the vibrators 116 will not negatively influence how the bulk material 102 is fed towards the discharge port 106.

Each vibrator 116 may typically be connected to a bracket 119 which extends through the opening 117. Each vibrator 116 may typically be connected to the bracket 119 by being screwed or welded to the bracket 119. The bracket 119 may typically be connected to the support plate 112 by being welded or screwed to the support plate 112.

In the depicted system 100, a clamping profile 120 clamping a peripheral portion of the support plate 112 and being attached to the support structure 114 is provided. The clamping profile 120 accommodates a vibration damping lining 121 arranged between the peripheral portion of the support plate 112 and the clamping profile 120. This is best illustrated in the middle inserted partial view of Fig. 4.

As can be in said inserted partial view of Fig. 4, the clamping profile 120 is provided at the joint between two neighbouring support plates 112 of the storage and reclaim system 100. The clamping profile 120 is fixedly attached to the support structure by a bolt 123. The depicted vibration damping lining 121 is a rubber lining or an elastomeric lining which is housed in and thus held in place by the clamping profile 120. Other materials may be used in the vibration damping lining 121 to advantage. The vibration damping lining 121 further counteracts transmission of vibrations from the support plate 112 to the support structure 114.

The depicted claiming profile 120 has a general C-shape. Other shapes of the clamping profile 120 may be used to advantage for instance depending on the design or need at hand. By this arrangement, the support plate 112 may be held in place with respect to the support structure 114 while still being free to move in a plane thereof. More specifically, the support plate 112 is free to move a limited extent in a plane thereof with respect to the support structure 114. Moreover, the use of a clamping profile 120 brings about that the support plate 112 is sealed with respect to the support structure 114 and any underlying structure. This means that the bulk material 102 is counteracted from unintentionally exiting the bulk material holding space 104 which in turn means that the bulk material 102 is counteracted from entering between the support plate 112 and the support structure 114 which would otherwise risk influencing the system 100 negatively.

The clamping profile 120 typically extend along the edges of the side edges support plate 112. However, the clamping profile 120 may extend along all edges of the support plate 112. The clamping profile 120 may extend along portions of one or more of the edges of the support plate 112. In other words, the clamping profile 120 may be formed of a number of segments together forming the clamping profile 120.

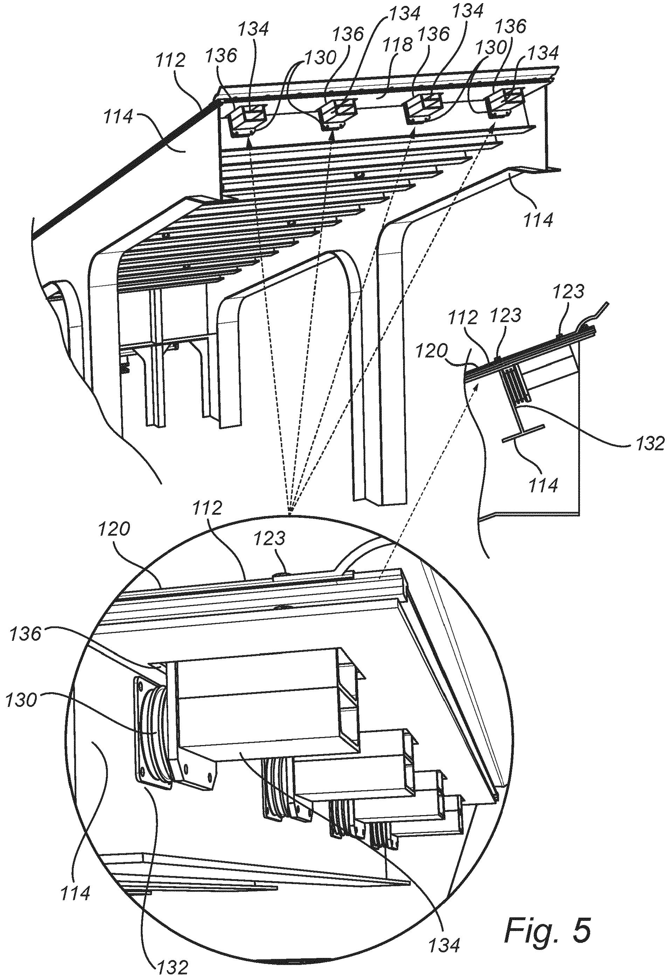

Now also turning to Fig. 5. In Fig. 5 it is depicted how the storge and reclaim system 100 also includes a number of abutment vibration dampers 130 arranged between the support plate 112 and the support structure 114. In Fig. 5 four abutment vibration dampers 130 arranged between the support plate 112 and the support structure 114. However, any number of abutment vibration dampers 130 arranged between the support plate 112 and the support structure 114 may be used to advantage. The abutment vibration dampers 130 are configured to prevent translation of the support plate 112 downwards towards the discharge port 106. In addition to preventing that the support plate 112 is translated downwards towards the discharge port 106, the abutment vibration dampers 130 counteract transmission of vibrations from the support plate 112 to the support structure 114. The depicted abutment vibration dampers 130 are of a type sold under the tradename of SAW 150 A by Trelleborg AB. This type of abutment vibration damper 130 comprises an elastomeric body arranged between attachment brackets. Such abutment vibration damper 130 which comprises an elastomeric body arranged between attachment brackets are capable of taking up large shear loads while still providing an efficient counteraction of translation of vibrations form the support plate 112 to the support structure 114.

An alternative abutment vibration damper 130 is of a type sold under the tradename of GFM-D-10000-4 by Vibratec^{®}. This type of abutment vibration damper 130 is an all-steel abutment vibration damper 130 generally of the same type as the GZD-G-7000 as introduced above. In order to avoid undue repetition, GFM-D-10000-4 will not be described in greater detail.

A further alternative abutment vibration damper 130 is of a type VT-GMF by Vibratec^{®}.

A further alternative abutment vibration damper 130 is of a type VT2000 by RG+^{®}.

As is best seen in the inserted partial view of Fig. 5, the abutment vibration damper 130 is attached to the support plate 112 and abuts an abutment surface 132 of the support structure 114. More specifically, the abutment vibration damper 130 is attached to a bracket 134 which in turn is attached to the support plate 112. The depicted bracket 134 is welded to the backside of the support plate 112, and an attachment bracket of the abutment vibration damper 130 is bolted to the bracket 134 such that the abutment vibration damper 130 is arranged in a direction being perpendicular to the upper surface of the support plate 112.

The abutment surface 132 of the support structure 114 is a surface portion of a beam used to support the support plate 112 via the backing plate 118. Any type of abutment surface may be used to advantage.

The depicted abutment vibration dampers 130 each extends through an opening 136 in the backing plate 118. Also, the respective brackets 134 each extends through the opening 136 in the backing plate 118 in unison with the respective abutment vibration dampers 130.

As an alternative or additionally, the clamping profile 120 may be provided at a lowermost edge of the support plate 112 such that the support plate 112 is counteracted or prevented from sliding downwards due to its inclination.

The above-described structure vibration dampers 126 and abutment vibration dampers 130 are typically replaceable. However, the structure vibration dampers 126 and abutment vibration dampers 130 may be permanently attached to the storage and reclaim system 100.

In the depicted system 100 the support plate 112 is inclined with an angle α of 20 degrees with respect to a horizontal plane. Other angles α within the range of 5-30 degrees with respect to a horizontal plane may be used to advantage. By utilizing an angle α of 20 degrees with respect to a horizontal plane a significant amount of valuable space may be saved. Hence, the bulk material holding space 104 may be made larger as compared to when steep sidewalls according to prior art are used. Owing for instance from the free-floating arrangement of the support plate 112 and the vibrators 116 arranged thereon, the support plate 112 may exhibit a significantly smaller angle α with respect to a horizontal plane while the bulk material 102 may still be fed towards the discharge port 106 in a gravity assisted manner.

In the depicted system 100, the discharge port 106 further comprises one or more inclined discharge port plates 124. The discharge port plates 124 are consequently arranged in proximity to, and typically directly by, the discharge port 106. The discharge port plates 124 are used for guiding the bulk material 102 and for assisting gravity induced feeding of the bulk material 102 towards the discharge port 106. As can be seen in e.g. Figs. 3 and 4 the discharge port plates 124 are arranged at a steeper angle than the support plate 112. More specifically, each discharge port plate 124 is inclined with an angle in the range of 30-70 degrees with respect to a horizontal plane. It is to be noted that the discharge port plates 124 may be omitted such that the bulk material may enter the discharge port directly from the support plate 112.

As can be seen in Fig. 4, the depicted discharge port plate 124 is provided with two vibrators 116. Any number of vibrators 116 may be used to advantage at the discharge port plates 124. Hence, the one or more vibrators 116 may consequently be connected to each discharge port plate 124. The vibrators 116 are thus configured to transfer vibrational energy to the discharge port plate 124 at hand to induce a vibrational movement of the discharge port plate 124. Further, each discharge port plate 124 may be supported by the support structure 114 in a free-floating manner. By supporting each discharge port plate 124 in a free-floating manner, the same or similar advantages to those discussed in relation to the support plate 112 may be achieved. Those advantages will consequently not be repeated here to avoid undue repetition.

The intermediate layer 122 is further arranged between the support structure 114 and the discharge port plate 124. Thus, the intermediate layer 122 having vibration isolating properties may counteract transmission of vibrations from the discharge port plate 124 to the support structure 114. By providing the intermediate layer 122 between the support structure 114 and the discharge port plate 124, the same or similar advantages to those discussed in relation to the support plate 112 may be achieved. Those advantages will consequently not be repeated here to avoid undue repetition.

In the depicted system 100, a set of further abutment vibration dampers 131 are arranged between the discharge port plates 124 and the support structure 114. This is schematically shown in phantom in Fig. 4. The further abutment vibration dampers 131 are configured to prevent translation of the inclined discharge port plate 124 downwards towards the discharge port 106. In addition to preventing that the discharge port plate 124 is translated downwards towards the discharge port 106, the further abutment vibration dampers 131 counteract transmission of vibrations from the discharge port plate 124 to the support structure 114. The depicted abutment vibration dampers 131 are the same type as the abutment vibration dampers 130 discussed above. Also, the alternative abutment vibration damper 130 discussed above may be used to advantage. The depicted discharge port plate 124 of Fig 4 is provided with two further abutment vibration dampers 131. However, any number of further abutment vibration dampers 131 may be used to advantage.

The further abutment vibration dampers 131 are attached to the discharge port plate 124 and abuts an abutment surface 132 of the support structure 114. More specifically, the further abutment vibration dampers 131 are each attached to a respective bracket 135 which in turn is attached to the discharge port plate 124. The depicted bracket 135 which is shown in phantom in Fig. 4 is welded to the backside of the discharge port plate 124, and an attachment bracket of the further abutment vibration damper 131 is bolted to the bracket 135 such that the further abutment vibration damper 131 is arranged in a direction being perpendicular to the upper surface of the discharge port plate 124. Hence, the further abutment vibration dampers 131 are provided correspondingly to the abutment vibration dampers 130 but to the discharge port plate 124 instead of the support plate 112. Given the corresponding provision of the further abutment vibration dampers 131 the same or similar advantages to those discussed in relation to the abutment vibration dampers 130 may be achieved. Those advantages will consequently not be repeated here to avoid undue repetition.

The discharge port plates 124 may or may not be provided with vibrators 116. Some discharge port plates 124 may be provided with vibrators 116 while others not.

Now turning to Fig. 6 also. In Fig 6, three alternative designs of the intermediate layer 122 are schematically illustrated. That is, in Fig. 6 three additional designs of the intermediate layer 122 apart from the intermediate layer discussed above in relation to Fig. 4 are depicted. All three alternative designs of the intermediate layer 122 are providing the same or similar advantages as those discussed in relation to the intermediate layer 122 of Fig. 4. Those advantages will consequently not be repeated here to avoid undue repetition.

However, all three alternative designs of the intermediate layer 122 are having progressive compression characteristics. The progressive compression characteristics are achieved in different ways in the respective designs of Fig. 6.

In the uppermost design D1 of Fig. 6 the intermediate layer 122 includes two different materials D1:1, D1:2 of different thicknesses arranged side by side in the intermediate layer 122. The intermediate layer 122 is shown while placed on the backing plate 118. The support plate 112 which in practice is arranged on top of the intermediate layer 122 is omitted to more clearly show the intermediate layer 122. Further, in the depicted design D1 of the intermediate layer 122 the respective materials D1:1, D1:2 are having different stiffnesses. Material D1:1 is softer as compared to material D1:2. Material D1:1 is thicker as compared to material D1:2. Material D1:1 is provided in wider strips as compared to material D1:2.

In the depicted design D1 of Fig. 6 the material strips of material D1:1 are formed of an elastomer mat sold under the trade name of Sylomer^{®} AFM 35 (Acoustic Floor Mat 35) by Getzner, whereas the material strips of material D1:2 are formed of an elastomer mat sold under the trade name of Sylomer^{®} SR 450 by Getzner. The material strips of material D1:1 occupies 85 % of the surface and the material strips of material D1:2 occupies the remaining 15 %. Other materials may be used to advantage.

By design D1 progressive compression characteristics are achieved. For relatively speaking lower loads, the support plate 112 will solely be backed by the material strips of material D1:1. However, as the load increases, the material strips of material D1:1 will get more and more compressed which means that also the material strips of material D1:2 will start backing the support plate 112 when subjected to an increasing load. Hence, for relatively speaking large loads, both the material strips of material D1:1 and the material strips of material D1:2 will back the support plate 112.

The different materials D1:1 and D1:2 may not just be provided as strips running alongside each other. The respective materials D1:1 and D1:2 may be provided as dots, one material may be provided as "islands" surrounded by the other material or the materials may be provided as a lattice to give a few non-limiting examples. Further, any number of different materials may be used to advantage.

In the middle design D2 of Fig. 6 the intermediate layer 122 includes two different materials D2:1, D2:2 of different thicknesses stacked on top of each other in the intermediate layer 122. The intermediate layer 122 is shown while placed on the backing plate 118. The support plate 112 which in practice is arranged on top of the intermediate layer 122 is omitted to more clearly show the intermediate layer 122. Further, in the depicted design D2 of the intermediate layer 122 the respective materials D2:1, D2:2 are having different stiffnesses. Material D2:1 is softer as compared to material D2:2. Material D2:1 is thicker as compared to material D2:2.

In the depicted design D2 of Fig. 6 the material layer of material D2:1 is formed of an elastomer mat sold under the trade name of Sylomer^{®} SR 450 by Getzner, whereas the material layer of material D2:2 is formed of an elastomer mat sold under the trade name of Sylomer^{®} AFM 35 (Acoustic Floor Mat 35) by Getzner. Other materials may be used to advantage.

By design D2 progressive compression characteristics are achieved. For relatively speaking lower loads, the support plate 112 will mainly compress material D2:1. However, for relatively speaking large loads, both the material D2:1 and the material D2:2 will get compressed.

In the lowermost design D3 of Fig. 6 the intermediate layer 122 is formed of a single material D3:1. The intermediate layer 122 is shown while placed on the backing plate 118. The support plate 112 which in practice is arranged on top of the intermediate layer 122 is omitted to more clearly show the intermediate layer 122. Further, in the depicted design D3 of the intermediate layer 122 the material D3:1 is a textured material. More specifically, material D3:1 has a wavy surface. That is, the material D3:1 is provided with "tops" and "valleys" as can be seen in Fig. 6.

In the depicted design D3 of Fig. 6 the material layer of material D3:1 is formed of an elastomer mat sold under the trade name of Sylomer^{®} AFM35 by Getzner. Other materials may be used to advantage.

By design D3 progressive compression characteristics are achieved. For relatively speaking lower loads, the support plate 112 will solely be backed by the tops of material D3:1. However, as the load increases, the material layer of material D3:1 will get more and more compressed which means that more and more surface area of the material layer of material D3:1 will start backing the support plate 112 when subjected to an increasing load. Hence, for relatively speaking large loads, also the valleys of the material layer of material D3:1 will back the support plate 112.

The vibrators 116 of the system 100 are advantageously independently controllable. It is thus possible to operate each vibrator 116 independently of any other vibrator in the system 100. It may also be possible to adjust operation parameters of each vibrator 116 independently of any other vibrator in the system 100. Operation parameters may include an amount of vibrational energy, a frequency, an operation time, an operation pattern to give a few non-limiting examples.

By having independently controllable vibrators 116 several advantages may be achieved. It may for instance be possible to control the vibrators 116 in a certain pattern to achieve an efficient feeding of the bulk material 102 towards the discharge port 106. A typical pattern may be to start the vibrator or vibrators 116 closest to the discharge port 106 first. The concerned vibrators 116 may be started first after a spontaneous gravity induced flow of the bulk material 102 has stopped in order to save energy and to not induce vibrations for an unnecessary long time. Vibrators 116 located farther away from the discharge port may then be started successively to feed bulk material 102 in an efficient manner along the support plate 112 towards the discharge port 106.

A bulk material level may be monitored in the bulk material holding space 104. The vibrators 116 may be controlled based on the bulk material level in the bulk material holding space 104. Sticking or clogging of bulk material 102 in the bulk material holding space 104 may be monitored. The vibrators 116 may be controlled based on bulk material 102 sticking or clogging in the bulk material holding space 104.

Now referring to Fig. 7 here is conceptually depicted a land-based storage 300 comprising a storage and reclaim system 100 of the above-described kind. As can be seen in Fig. 7, the land-based storage 300 includes a number of modules each including two opposite support plates 112 being inclined towards a centrally located discharge port 106. A plurality of modules are arranged after one another in three rows in the depicted land-based storage 300. In other words, the storage and reclaim system 100 includes a plurality of modules each including support plates 112 and a discharge port 106. Moreover, the support plates 112 are provided with vibrators 116 and arranged supported in a free-floating manner on a support structure 114 as have been described in greater detail with reference to Figs. 2-4.

Further, the storage and reclaim system 100 of the land-based storage 300 comprises an intermediate layer 122 arranged between the support structure 114 and the support plates 112. The intermediate layer 122 having vibration isolating properties such that transmission of vibrations from the support plate 112 to the support structure 114 is counteracted. Likewise, the support structure 114 is damped connected to a major structure 150 in form a foundation by structure vibration dampers 126 such that transmission of vibrations from the storage and reclaim system 100 to the major structure 150 is counteracted.

A conveyor 110 is arranged under respective row of discharge ports 106. Hence three conveyors 100 are used in the depicted land-based storage 300. It is to be understood that any number of modules may be arranged in any number of rows when designing a land-based storage 300 including a storage and reclaim system 100 of the above-described kind. Hence, any number of support plates 112, vibrators 116, conveyors 110 etc. may be used to advantage in a land-based storage 300. A land-based storage 300 of the above kind is consequently a self-unloading land-based storage 300.

However, it is to be understood that the storage and reclaim system 100 of the land-based storage 300 may be employed with any of the features discussed in conjunction with the storage and reclaim system 100 discussed in conjunction with Figs. 2-6. These features will not be repeated here in order to avoid undue repetition.

Advantages related to the storage and reclaim system 100 of the land-based storage 300 are the same or similar as have been described above in conjunction with Figs. 2-6 and will consequently not be repeated in order to avoid undue repetition.

Now referring to Fig. 8 here is conceptually depicted how hoppers 400 are used for unloading a vessel. Each a hopper 400 comprising a storage and reclaim system 100 of the above-described kind. The hopper 400 includes two opposite support plates 112 being inclined towards a centrally located discharge port 106. The support plates 112 are supported by a support structure 114 in a free-floating manner as have been described above in relation to Figs. 2-5. Each support plate 112 is provided with two vibrators 116 of the above-described kind. In other words, a typical hopper 400 includes a bulk material storage space 104 which tapers down towards a discharge port 106.
Further, the storage and reclaim system 100 of the hopper 400 comprises an intermediate layer 122 arranged between the support structure 114 and the support plates 112. The intermediate layer 122 having vibration isolating properties such that transmission of vibrations from the support plate 112 to the support structure 114 is counteracted. Likewise, the support structure 114 is damped connected to a major structure 150 in form of a quay by structure vibration dampers 126 such that transmission of vibrations from the storage and reclaim system 100 to the major structure 150 is counteracted.

Bulk material 102 may be stored temporarily in the hopper 400 when for instance handling bulk material 102 at a vessel by means of a grab bucket. When unloading bulk cargo from a vessel as depicted in Fig. 8, a grab bucket may grab bulk material in the cargo hold of the vessel and subsequently drop the bulk material 102 into a hopper 400 located in proximity to the vessel, e.g. on the quay as depicted in Fig. 8.

Alternatively, a hopper 400 or hoppers 400 of the above kind may be located above deck on a vessel.

Conveyors, conveyor belts, transport screws or similar for conveying the bulk cargo form the vessel may typically be arranged below each hopper 400. The conveyors, transport screws or similar may be located at the vessel. The conveyors or similar may be located at a quay or dock.

The grab bucket or grab buckets used to unload the cargo hold of the vessel may be hoisted by a crane located above deck at the vessel itself. The grab bucket or grab buckets used to unload the cargo hold of the vessel may be hoisted by a crane located at a quay, dock, barge or similar.

A hopper 400 of the depicted type may be made significantly lower and hence lighter as compared to prior art hoppers. As an example, the weight of a hopper 400 with a bulk material handling capacity of 50 tonnes per run may be reduced from 90 tonnes to 30 tonnes. A reduced height and weight of the hopper 400 may reduce the roll of the vessel as compared to standard prior art hoppers when the hopper is mounted above deck on the vessel itself.

When the hopper 400 is used in conjunction with a large naval vessel and large cranes, a single grab by a grab bucket may drop 40-50 tonnes of bulk material 102 into the hopper 400. The bulk material 102 may then be stored temporarily or for a prolonged time in the hopper 400. The hopper may for instance be emptied in about 30-40 seconds even if 40-50 tonnes of bulk material 102 has been dropped therein. The hopper may in that case typically be emptied onto a conveyor, transport screws or other transport means.

Moreover, bulk material 102 may be stored for a prolonged time in a hopper 400 when for instance installing the hopper 400 in a storage tower. The discharge port 106 may exit over a conveyor, a transport screw or a cargo hold to give a few non-liming examples.

The storage and reclaim system 100 of the hopper 400 may be employed with any of the features discussed in conjunction with the storage and reclaim system 100 discussed in conjunction with Figs. 2-6. These features will not be repeated here in order to avoid undue repetition.

Advantages related to the storage and reclaim system 100 of the hopper are the same or similar as have been described above in conjunction with Figs. 2-6 and will consequently not be repeated in order to avoid undue repetition.

As have been described in detail above, the storage and reclaim system 100 may be used for a large variety of bulk materials. The storage and reclaim system 100 may for instance be used for handling of bulk materials 102 such as wood chips, wood pellets, sawdust, coal, ore, gypsum rock, bauxite, alumina, cement, sand, gravel, crushed rock, salt, grains and aggregates.

It will be appreciated that the present inventive concept is not limited to the variants and examples shown. Several modifications and variations are thus conceivable within the scope of the invention which thus is defined by the appended claims.

## Claims

1. A storage and reclaim system (100) for bulk material (102), said system comprising:
a bulk material holding space (104) having a bottom portion (108) provided with a discharge port (106), wherein the bottom portion (108) comprises an inclined support plate (112) for supporting the bulk material (102) and for assisting gravity induced feeding of the bulk material (102) towards the discharge port (106),
a support structure (114) supporting the support plate (112), and
one or more vibrators (116) connected to the support plate (112) and configured to transfer vibrational energy to the support plate (112) to induce a vibrational movement of the support plate (112),
wherein the support plate (112) is supported by the support structure (114) in a free-floating manner,
**characterized by**,
an intermediate layer (122) arranged between the support structure (114) and the support plate (112), the intermediate layer (122) having vibration isolating properties such that transmission of vibrations from the support plate (112) to the support structure (114) is counteracted, wherein the intermediate layer (122) having progressive compression characteristics by the intermediate layer (122) including at least two different materials of different thicknesses arranged side by side in the intermediate layer (122), and/or by the intermediate layer (122) including at least two different materials stacked on top of each other, and/or by the intermediate layer (122) being textured,
the support plate (112) being inclined with an angle (α) in the range of 15-25 degrees with respect to a horizontal plane, and
at least one structure vibration damper (126), wherein the support structure (114) is damped connected to a major structure (150) by the at least one structure vibration damper (126) such that transmission of vibrations from the storage and reclaim system (100) to the major structure (150) is counteracted.

2. The storage and reclaim system (100) according to claim 1, wherein at least one structure vibration damper (126) is arranged at any interface between the support structure (114) and the major structure (150).

3. The storage and reclaim system (100) according to claim 1 or 2, the system (100) further comprising an abutment vibration damper (130) arranged between the support plate (112) and the support structure (114), and configured to prevent translation of the support plate (112) downwards towards the discharge port (106).

4. The storage and reclaim system (100) according to claim 3, wherein the abutment vibration damper (130) is attached to the support plate (112) and abuts an abutment surface (132) of the support structure (114).

5. The storage and reclaim system (100) according to any one of the preceding claims, in which the support structure (114) comprises a backing plate (118), wherein the support plate (112) rests on the backing plate (118).

6. The storage and reclaim system (100) according to claim 5 when dependent on claim 3 or 4, wherein the abutment vibration damper (130) extends through an opening (136) and/or a slot in the backing plate (118).

7. The storage and reclaim system (100) according to any one of the preceding claims, wherein the intermediate layer (122) comprises an elastomeric material.

8. The storage and reclaim system (100) according to any one of the preceding claims, wherein the structure vibration damper (126) comprises a metal based damping body having progressive compression characteristics.

9. The storage and reclaim system (100) according to claim 3, wherein the abutment vibration damper (130) comprises an elastomeric body arranged between attachment brackets.

10. The storage and reclaim system (100) according to any one of the preceding claims, wherein the structure vibration damper (126), and, if present, the abutment vibration damper (130) are replaceable.

11. The storage and reclaim system (100) according to any one of the preceding claims, wherein the system further comprises a clamping profile (120) clamping a peripheral portion of the support plate (112) and being attached to the support structure (114), the clamping profile (120) accommodating a vibration damping lining (121) arranged between the peripheral portion of the support plate (112) and the clamping profile (120).

12. The storage and reclaim system (100) according to any one of the preceding claims, wherein the discharge port (106) further comprises one or more inclined discharge port plates (124) for guiding the bulk material (102) and for assisting gravity induced feeding of the bulk material (102) towards the discharge port (106), wherein each discharge port plate (124) is inclined with an angle in the range of 30-70 degrees with respect to a horizontal plane,
wherein one or more vibrators (116) are connected to each discharge port plate (124) and configured to transfer vibrational energy to the discharge port plate (124) to induce a vibrational movement of the discharge port plate (124), wherein each discharge port plate (124) is supported by the support structure (114) in a free-floating manner, and
wherein the intermediate layer (122) is further arranged between the support structure (114) and the one or more discharge port plates (124).

13. The storage and reclaim system (100) according to claim 12, the system (100) further comprising a further abutment vibration damper (131) arranged between the one or more discharge port plates (124) and the support structure (114), and configured to prevent translation of the one or more inclined discharge port plates (124) downwards towards the discharge port (106).

14. The storage and reclaim system (100) according to claim 13, wherein the further abutment vibration damper (131) is attached to the one or more discharge port plates (124) and abuts a further abutment surface of the support structure (114).

15. The storage and reclaim system (100) according to any one of the preceding claims, the system (100) further comprising an additional inclined support plate (112) for supporting the bulk material (102) and for assisting gravity induced feeding of the bulk material (102) towards the discharge port (106) from an opposite side thereof.

16. A vessel (200) comprising a storage and reclaim system according to any one of claims 1-15.

17. A land-based storage (300) comprising a storage and reclaim system (100) according to any one of claims 1-15.

18. A hopper (400) comprising a storage and reclaim system (100) according to any one of claims 1-15.

19. Use of a storage and reclaim system (100) according to any one of claims 1-15 for handling of bulk material (102) chosen from group consisting of: wood chips, wood pellets, sawdust, coal, ore, gypsum rock, bauxite, alumina, cement, sand, gravel, crushed rock, salt, grains and aggregates.

## Patentansprüche

1. Lager- und Rückgewinnungssystem (100) für Schüttgut (102), wobei das System Folgendes umfasst:
einen Schüttgut-Aufnahmeraum (104), der einen unteren Abschnitt (108) umfasst, der mit einer Entladeöffnung (106) versehen ist, wobei der untere Abschnitt (108) eine geneigte Stützplatte (112) zum Stützen des Schüttgutes (102) und zum Unterstützen der schwerkraftinduzierten Zuführung des Schüttgutes (102) hin zu der Entladeöffnung (106) umfasst,
eine Stützstruktur (114), welche die Stützplatte (112) stützt, und
eine oder mehrere Rüttelvorrichtungen (116), die mit der Stützplatte (112) verbunden und dafür konfiguriert sind, Schwingungsenergie zu der Stützplatte (112) zu übertragen, um eine Schwingungsbewegung der Stützplatte (112) hervorzurufen,
wobei die Stützplatte (112) durch die Stützstruktur (114) auf eine freischwebende Weise gestützt wird,
**gekennzeichnet durch**
eine Zwischenschicht (122), die zwischen der Stützstruktur (114) und der Stützplatte (112) angeordnet ist, wobei die Zwischenschicht (122) schwingungsisolierende Eigenschaften derart aufweist, dass einer Übertragung von Schwingungen von der Stützplatte (112) zu der Stützstruktur (114) entgegengewirkt wird, wobei die Zwischenschicht (122) progressive Kompressionsmerkmale aufweist **dadurch**, dass die Zwischenschicht (122) mindestens zwei unterschiedliche Werkstoffe von unterschiedlichen Dicken einschließt, die nebeneinander in der Zwischenschicht (122) angeordnet sind, und/oder dadurch, dass die Zwischenschicht (122) mindestens zwei unterschiedliche Werkstoffe einschließt, die aufeinander gestapelt sind, und/oder **dadurch**, dass die Zwischenschicht (122) texturiert ist,
die Stützplatte (112), die mit einem Winkel (α) in dem Bereich von 15 bis 25 Grad in Bezug auf eine horizontale Ebene geneigt ist, und
mindestens einen Strukturschwingungsdämpfer (126), wobei die Stützstruktur (114) **durch** den mindestens einen Strukturschwingungsdämpfer (126) derart gedämpft mit einer Hauptstruktur (150) verbunden ist, dass einer Übertragung von Schwingungen von dem Lager- und Rückgewinnungssystem (100) zu der Hauptstruktur (150) entgegengewirkt wird.

2. Lager- und Rückgewinnungssystem (100) nach Anspruch 1, wobei mindestens ein Strukturschwingungsdämpfer (126) an jeglicher Grenzfläche zwischen der Stützstruktur (114) und der Hauptstruktur (150) angeordnet ist.

3. Lager- und Rückgewinnungssystem (100) nach Anspruch 1 oder 2, wobei das System (100) ferner einen Widerlagerschwingungsdämpfer (130) umfasst, der zwischen der Stützplatte (112) und der Stützstruktur (114) angeordnet und dafür konfiguriert ist, eine Verschiebung der Stützplatte (112) nach unten hin zu der Entladeöffnung (106) zu verhindern.

4. Lager- und Rückgewinnungssystem (100) nach Anspruch 3, wobei der Widerlagerschwingungsdämpfer (130) an der Stützplatte (112) befestigt ist und an eine Widerlagerfläche (132) der Stützstruktur (114) anstößt.

5. Lager- und Rückgewinnungssystem (100) nach einem der vorhergehenden Ansprüche, wobei die Stützstruktur (114) eine Montageplatte (118) umfasst, wobei die Stützplatte (112) auf der Montageplatte (118) ruht.

6. Lager- und Rückgewinnungssystem (100) nach Anspruch 5, wenn abhängig von Anspruch 3 oder 4, wobei sich der Widerlagerschwingungsdämpfer (130) durch eine Öffnung (136) und/oder einen Schlitz in der Montageplatte (118) erstreckt.

7. Lager- und Rückgewinnungssystem (100) nach einem der vorhergehenden Ansprüche, wobei die Zwischenschicht (122) einen elastomeren Werkstoff umfasst.

8. Lager- und Rückgewinnungssystem (100) nach einem der vorhergehenden Ansprüche, wobei der Strukturschwingungsdämpfer (126) einen Dämpfungskörper auf Metallbasis umfasst, der progressive Kompressionsmerkmale aufweist.

9. Lager- und Rückgewinnungssystem (100) nach Anspruch 3, wobei der Widerlagerschwingungsdämpfer (130) einen Elastomerkörper aufweist, der zwischen Befestigungshalterungen angeordnet ist.

10. Lager- und Rückgewinnungssystem (100) nach einem der vorhergehenden Ansprüche, wobei der Strukturschwingungsdämpfer (126) und, falls vorhanden, der Widerlagerschwingungsdämpfer (130) auswechselbar sind.

11. Lager- und Rückgewinnungssystem (100) nach einem der vorhergehenden Ansprüche, wobei das System ferner ein Klemmprofil (120) umfasst, das einen Umfangsabschnitt der Stützplatte (112) festklemmt und an der Stützstruktur (114) befestigt ist, wobei das Klemmprofil (120) eine Schwingungsdämpfungsauskleidung (121) aufnimmt, die zwischen dem Umfangsabschnitt der Stützplatte (112) und dem Klemmprofil (120) angeordnet ist.

12. Lager- und Rückgewinnungssystem (100) nach einem der vorhergehenden Ansprüche, wobei die Entladeöffnung (106) ferner eine oder mehrere geneigte Entladeöffnungsplatten (124) zum Leiten des Schüttgutes (102) und zum Unterstützen der schwerkraftinduzierten Zuführung des Schüttgutes (102) hin zu der Entladeöffnung (106) umfasst, wobei jede Entladeöffnungsplatte (124) mit einem Winkel in dem Bereich von 30 bis 70 Grad in Bezug auf eine horizontale Ebene geneigt ist,
wobei eine oder mehrere Rüttelvorrichtungen (116) mit jeder Entladeöffnungsplatte (124) verbunden und dafür konfiguriert sind, Schwingungsenergie zu der Entladeöffnungsplatte (124) zu übertragen, um eine Schwingungsbewegung der Entladeöffnungsplatte (124) herbeizuführen, wobei jede Entladeöffnungsplatte (124) durch die Stützstruktur (114) auf eine freischwebende Weise gestützt wird, und
wobei die Zwischenschicht (122) ferner zwischen der Stützstruktur (114) und der einen oder den mehreren Entladeöffnungsplatten (124) angeordnet ist.

13. Lager- und Rückgewinnungssystem (100) nach Anspruch 12, wobei das System (100) ferner einen weiteren Widerlagerschwingungsdämpfer (131) umfasst, der zwischen der einen oder den mehreren Entladeöffnungsplatten (124) und der Stützstruktur (114) angeordnet und dafür konfiguriert ist, eine Verschiebung der einen oder der mehreren Entladeöffnungsplatten (124) nach unten hin zu der Entladeöffnung (106) zu verhindern.

14. Lager- und Rückgewinnungssystem (100) nach Anspruch 13, wobei der weitere Widerlagerschwingungsdämpfer (131) an der einen oder den mehreren Entladeöffnungsplatten (124) befestigt ist und an eine weitere Widerlagerfläche der Stützstruktur (114) anstößt.

15. Lager- und Rückgewinnungssystem (100) nach einem der vorhergehenden Ansprüche, wobei das System (100) ferner eine zusätzliche geneigte Stützplatte (112) zum Stützen des Schüttgutes (102) und zum Unterstützen der schwerkraftinduzierten Zuführung des Schüttgutes (102) hin zu der Entladeöffnung (106) von einer entgegengesetzten Seite derselben umfasst.

16. Schiff (200), das ein Lager- und Rückgewinnungssystem nach einem der Ansprüche 1 bis 15 umfasst.

17. Landgestütztes Lager (300), das ein Lager- und Rückgewinnungssystem (100) nach einem der Ansprüche 1 bis 15 umfasst.

18. Bunker (400), der ein Lager- und Rückgewinnungssystem (100) nach einem der Ansprüche 1 bis 15 umfasst.

19. Verwendung eines Lager- und Rückgewinnungssystems (100) nach einem der Ansprüche 1 bis 15 zum Handhaben von Schüttgut (102), das ausgewählt ist aus einer Gruppe, die aus Folgendem besteht: Holzspänen, Holzpellets, Sägemehl, Kohle, Erz, Gipsgestein, Bauxit, Aluminiumoxid, Zement, Sand, Schotter, zerkleinertem Gestein, Salz, Körnern und Zuschlagstoffen.

## Revendications

1. Système de stockage et de récupération (100) pour un matériau en vrac (102), ledit système comprenant :
un espace de chargement de matériau en vrac (104) comportant une portion de fond (108) pourvue d'un orifice de décharge (106), dans lequel la portion de fond (108) comprend une plaque de support inclinée (112) pour supporter le matériau en vrac (102) et pour assister l'alimentation par gravité du matériau en vrac (102) en direction de l'orifice de décharge (106),
une structure de support (114) supportant la plaque de support (112), et
un ou plusieurs vibrateurs (116) connectés à la plaque de support (112) et configurés pour transférer de l'énergie vibratoire à la plaque de support (112) afin d'induire un mouvement vibratoire de la plaque de support (112),
dans lequel la plaque de support (112) est supportée de manière librement flottante par la structure de support (114),
**caractérisé par**
une couche intermédiaire (122) agencée entre la structure de support (114) et la plaque de support (112), la couche intermédiaire (122) ayant des propriétés d'isolation des vibrations qui limitent la transmission des vibrations de la plaque de support (112) à la structure de support (114), dans lequel la couche intermédiaire (122) présente des caractéristiques de compression progressive par le fait que la couche intermédiaire (122) inclut au moins deux matériaux différents d'épaisseurs différentes agencés côte à côte dans la couche intermédiaire (122), et/ou par le fait que la couche intermédiaire (122) inclut au moins deux matériaux différents empilés l'un sur l'autre, et/ou par le fait que la couche intermédiaire (122) est texturée,
l'inclinaison de la plaque de support (112) d'un angle (α) compris dans une plage de 15 à 25 degrés par rapport à un plan horizontal, et
au moins un amortisseur des vibrations de structure (126), dans lequel la structure de support (114) est connectée de manière amortie à une structure principale (150) par ledit au moins un amortisseur des vibrations de structure (126) de manière à limiter la transmission des vibrations du système de stockage et de récupération (100) à la structure principale (150).

2. Système de stockage et de récupération (100) selon la revendication 1, dans lequel au moins un amortisseur des vibrations de structure (126) est agencé à une interface quelconque entre la structure de support (114) et la structure principale (150).

3. Système de stockage et de récupération (100) selon la revendication 1 ou 2, le système (100) comprenant en outre un amortisseur des vibrations de butée (130) agencé entre la plaque de support (112) et la structure de support (114), et configuré pour empêcher la translation de la plaque de support (112) vers le bas en direction de l'orifice de décharge (106).

4. Système de stockage et de récupération (100) selon la revendication 3, dans lequel l'amortisseur des vibrations de butée (130) est attaché à la plaque de support (112) et vient à butée contre une surface de butée (132) de la structure de support (114).

5. Système de stockage et de récupération (100) selon l'une quelconque des revendications précédentes, dans lequel la structure de support (114) comprend une plaque d'appui (118), dans lequel la plaque de support (112) repose sur la plaque d'appui (118).

6. Système de stockage et de récupération (100) selon la revendication 5 quand elle dépend de la revendication 3 ou 4, dans lequel l'amortisseur des vibrations de butée (130) s'étend à travers une ouverture (136) et/ou une fente dans la plaque d'appui (118).

7. Système de stockage et de récupération (100) selon l'une quelconque des revendications précédentes, dans lequel la couche intermédiaire (122) comprend un matériau élastomère.

8. Système de stockage et de récupération (100) selon l'une quelconque des revendications précédentes, dans lequel l'amortisseur des vibrations de structure (126) comprend un corps d'amortissement à base de métal ayant des caractéristiques de compression progressive.

9. Système de stockage et de récupération (100) selon la revendication 3, dans lequel l'amortisseur des vibrations de butée (130) comprend un corps élastomère agencé entre des brides d'attache.

10. Système de stockage et de récupération (100) selon l'une quelconque des revendications précédentes, dans lequel l'amortisseur des vibrations de structure (126) et, le cas échéant, l'amortisseur des vibrations de butée (130) sont remplaçables.

11. Système de stockage et de récupération (100) selon l'une quelconque des revendications précédentes, dans lequel le système comprend en outre un profilé de serrage (120) serrant une portion périphérique de la plaque de support (112) et attaché à la structure de support (114), le profilé de serrage (120) recevant une garniture d'amortissement des vibrations (121) agencée entre la portion périphérique de la plaque de support (112) et le profilé de serrage (120).

12. Système de stockage et de récupération (100) selon l'une quelconque des revendications précédentes,
dans lequel l'orifice de décharge (106) comprend en outre une ou plusieurs plaques d'orifice de décharge inclinées (124) pour guider le matériau en vrac (102) et pour assister l'alimentation par gravité du matériau en vrac (102) en direction de l'orifice de décharge (106), dans lequel chaque plaque d'orifice de décharge (124) est inclinée d'un angle compris dans une plage de 30 à 70 degrés par rapport à un plan horizontal,
dans lequel un ou plusieurs vibrateurs (116) sont connectés à chaque plaque d'orifice de décharge (124) et configurés pour transférer de l'énergie vibratoire à la plaque d'orifice de décharge (124) afin d'induire un mouvement vibratoire de la plaque d'orifice de décharge (124), dans lequel chaque plaque d'orifice de décharge (124) est supportée de manière librement flottante par la structure de support (114), et
dans lequel la couche intermédiaire (122) est en outre agencée entre la structure de support (114) et lesdites une ou plusieurs plaques d'orifice de décharge (124).

13. Système de stockage et de récupération (100) selon la revendication 12, le système (100) comprenant en outre un amortisseur des vibrations de butée supplémentaire (131) agencé entre lesdites une ou plusieurs plaques d'orifice de décharge (124) et la structure de support (114), et configuré pour empêcher la translation desdites une ou plusieurs plaques d'orifice de décharge inclinées (124) vers le bas en direction de l'orifice de décharge (106).

14. Système de stockage et de récupération (100) selon la revendication 13, dans lequel l'amortisseur des vibrations de butée supplémentaire (131) est attaché auxdites une ou plusieurs plaques d'orifice de décharge (124) et vient à butée contre une surface de butée supplémentaire de la structure de support (114).

15. Système de stockage et de récupération (100) selon l'une quelconque des revendications précédentes, le système (100) comprenant en outre une plaque de support inclinée supplémentaire (112) pour supporter le matériau en vrac (102) et pour assister l'alimentation par gravité du matériau en vrac (102) en direction de l'orifice de décharge (106) depuis un côté opposé.

16. Navire (200) comprenant un système de stockage et de récupération selon l'une quelconque des revendications 1 à 15.

17. Stockage terrestre (300) comprenant un système de stockage et de récupération (100) selon l'une quelconque des revendications 1 à 15.

18. Trémie (400) comprenant un système de stockage et de récupération (100) selon l'une quelconque des revendications 1 à 15.

19. Utilisation d'un système de stockage et de récupération (100) selon l'une quelconque des revendications 1 à 15 pour la manutention d'un matériau en vrac (102) choisi dans le groupe suivant : copeaux de bois, granulés de bois, sciure de bois, charbon, minerai, gypse, bauxite, alumine, ciment, sable, gravier, roche concassée, sel, céréales et agrégats.
